# DEMANDE DE BREVET EUROPEEN

(11) **EP 4 335 820 A1**
(43) Date de publication de la demande: **13.03.2024**
(21) Numéro de dépôt: 23196062.6
(22) Date de dépôt: 07.09.2023
(51) Int. Cl.: C01D 15/02, C01D 5/02

(54) **PROCEDE DE PREPARATION D'HYDROXYDE DE LITHIUM, ET INSTALLATION POUR LA MISE EN UVRE DU PROCEDE**

(30) Priorité: 08.09.2022 FR 2208978
(71) Demandeur: Eurodia Industrie, 84120 Pertuis (FR); France EVAPORATION, 59139 Noyelles les Seclin (FR)
(72) Inventeur: GONIN, Anne, 84120 PERTUIS (FR); LUTIN, Florence, 84120 PERTUIS (FR); CARDINEAUD, Arnaud, 59000 LILLE (FR)
(74) Mandataire: Cabinet Beau de Loménie

(57) **Abrégé**

La présente invention concerne un procédé de préparation d'hydroxyde de lithium comprenant de soumettre une composition aqueuse (A) comprenant du sulfate de lithium, et du sulfate de sodium, à une électrodialyse à membranes bipolaires; ladite étape d'électrodialyse à membranes bipolaires comprend le traitement sur un électrodialyseur comprenant au moins une cellule d'électrodialyse (200) comprenant un premier compartiment (220), alimenté en eau, et délimité entre une première membrane bipolaire (250) et une membrane anionique centrale (230), et un deuxième compartiment (210), alimenté par ladite composition aqueuse (A), et délimité entre ladite membrane anionique centrale (230) et une deuxième membrane bipolaire (240), puis de récupérer, de ladite au moins une cellule d'électrodialyse (200), une composition aqueuse (B) comprenant de l'hydroxyde de lithium et du sulfate de sodium, et la soumettre à une étape de cristallisation pour la préparation d'un sel.

## Description

### Domaine Technique

La présente invention concerne un procédé de préparation d'hydroxyde de lithium, et une installation pour la mise en oeuvre du procédé.

### Technique antérieure

L'hydroxyde de lithium est utilisé dans de nombreuses applications, par exemple dans les systèmes de purification des gaz respiratoires pour les engins spatiaux, les sous-marins et les recycleurs pour éliminer le dioxyde de carbone des gaz expirés en produisant du carbonate de lithium et de l'eau ; ou encore comme fluide caloporteur ou comme électrolyte pour les batteries, notamment les batteries de véhicules automobiles.

Cependant, le lithium ne se trouve pas naturellement sous forme métallique car il est très réactif. Le lithium doit ainsi être extrait et purifié du support auquel il est associé. Le lithium peut être extrait par lixiviation de roches magmatiques (par exemple de silicate de type spodumène), dans une moindre mesure du granite, mais aussi d'argiles ou encore à partir de réservoirs de saumures naturellement riches en sels de lithium, sodium et potassium localisés sous le lit de lacs salés (salars). Le lithium peut être présent dans certaines eaux souterraines, le secteur de la géothermie s'y intéresse en particulier. Le lithium peut être également recyclé à partir d'un support usagé et manufacturé intégrant du lithium ou encore à partir d'effluents aqueux comprenant du lithium et issus de procédé(s) de transformation du lithium.

Les sels de lithium obtenus sont utilisés par exemple comme ingrédients de base lors de la synthèse des matériaux de cathode ou bien comme sels dans les électrolytes de batteries au lithium.

Il existe ainsi un besoin pour proposer des procédés permettant d'isoler/séparer le lithium, minimisant les pertes en lithium, et visant à produire un lithium avec le moins d'impuretés possible.

EP 3 326 974 A1 a pour objet un procédé de préparation d'hydroxyde de lithium et de carbonate de lithium comprenant une étape de traitement d'une composition aqueuse comprenant du sulfate de lithium et du sulfate de sodium par une électrodialyse à membranes bipolaires à trois compartiments comprenant des membranes cationique et anionique, pour l'obtention d'une composition aqueuse comprenant de l'hydroxyde de lithium en mélange avec de l'hydroxyde de potassium et de l'hydroxyde de sodium. Dans ce procédé, lorsque cette composition aqueuse mixte est concentrée, l'hydroxyde de lithium (LiOH) puis l'hydroxyde de sodium (NaOH) arrivent à saturation, alors un sel « mixte » qui contient du lithium et du sodium se forme. Il est impossible par la suite d'isoler le lithium dans ce sel. L'hydroxyde de lithium solide obtenu aura donc une faible pureté.

On connaît également des procédés de séparation du lithium des sels formés avec le sodium et le potassium comprenant la précipitation du lithium avec le carbonate pour la formation de carbonate de lithium. Ces procédés impliquent une étape préalable de concentration par évaporation du lithium avant sa précipitation sous forme de carbonate car le carbonate de lithium (Li₂CO₃) est peu soluble dans l'eau. Dans certains cas, le carbonate de lithium est précipité à haute température car sa solubilité dans l'eau est inversement proportionnelle à la température alors que celle du carbonate de sodium reste très élevée entre 40°C et 100°C. Ces procédés impliquent donc des consommations d'énergie et surtout de produits chimiques importantes et peuvent induire la production de coproduits (NaCl, Na₂SO₄ par exemple).

Il existe un besoin pour un procédé de préparation d'hydroxyde de lithium, en particulier monohydraté, limitant la consommation de réactifs (soude ou carbonate de sodium par exemple) et les rejets salins ou permettant la valorisation d'acide sulfurique dans le circuit global de production d'hydroxyde de lithium, tout en minimisant les rejets salins.

Il existe également un besoin pour un procédé de préparation d'hydroxyde de lithium ayant un grade élevé de pureté, tout en proposant un procédé de préparation reproductible et fiable.

### Exposé de l'invention

La présente invention pallie tout ou partie des problèmes précités en ce qu'elle a pour objet, selon un premier aspect, un procédé de préparation d'hydroxyde de lithium comprenant les étapes :
a) soumettre une composition aqueuse (A) comprenant du sulfate de lithium, et du sulfate de sodium à une électrodialyse à membranes bipolaires (EDBP1) pour convertir au moins une partie, ou sensiblement la totalité, du sulfate de lithium en hydroxyde de lithium, en particulier en conservant les sels de sulfate de sodium; ladite étape a) d'électrodialyse à membranes bipolaires (EDBP1) comprenant le traitement sur un électrodialyseur comprenant au moins une cellule d'électrodialyse, ladite cellule d'électrodialyse comprenant :
   - un premier compartiment dans lequel de l'eau est alimentée, en particulier en entrée du premier compartiment, entre une première membrane bipolaire et une membrane anionique, notamment une membrane anionique centrale, et
   - un deuxième compartiment dans lequel ladite composition aqueuse (A) comprenant du sulfate de lithium et du sulfate de sodium est alimentée, en particulier en entrée du second compartiment, entre une membrane anionique, notamment ladite membrane anionique centrale, et une deuxième membrane bipolaire,
b) récupérer une composition aqueuse (B) comprenant de l'hydroxyde de lithium et du sulfate de sodium en sortie du deuxième compartiment de ladite au moins une cellule d'électrodialyse,
c) soumettre au moins une partie de la composition aqueuse (B) comprenant de l'hydroxyde de lithium et du sulfate de sodium à une étape de cristallisation d'un sel, notamment d'un sel d'hydroxyde de lithium ou d'un sel de sulfate de sodium.

Avantageusement, l'électrodialyse bipolaire (EDBP1) est une électrodialyse bipolaire à deux compartiments, anionique, ayant pour fonction d'extraire l'excès des ions sulfates SO₄²⁻ qui peut être associé aux ions Li⁺ ou aux ions Na⁺, et de produire de l'hydroxyde de lithium LiOH en mélange avec du sulfate de sodium Na₂SO₄.

De préférence, ladite au moins une cellule d'électrodialyse de l'électrodialyseur de l'étape b) (EDBP1) est constituée essentiellement (en particulier chacune des cellules d'électrodialyse empilées de l'électrodialyseur de l'étape b) (EDBP1) est constituée essentiellement) desdits premier et second compartiments séparés par la membrane anionique centrale.

Avantageusement, le premier compartiment est délimité entre la première membrane bipolaire et la membrane anionique centrale.

Avantageusement, le second compartiment est délimité entre la membrane anionique centrale et la seconde membrane bipolaire.

Avantageusement, ladite au moins une cellule est un motif unitaire répété plusieurs fois pour former un empilement de cellules dans l'électrodialyseur bipolaire (EDBP1). Avantageusement, la première membrane bipolaire du premier compartiment comprend une face anionique orientée vers l'anode et une face cationique orientée vers la cathode et vers ladite membrane anionique centrale.

Avantageusement, la seconde membrane bipolaire du second compartiment comprend une face anionique orientée vers l'anode et vers la membrane anionique centrale, et comprend une face cationique orientée vers la cathode.

Une membrane (dite) bipolaire peut être par exemple un assemblage de deux membranes : une membrane anionique et une membrane cationique.

Une membrane (dite) bipolaire peut être par exemple une membrane cationique comprenant des échangeurs anioniques greffés sur l'une de ses deux faces ou une membrane anionique comprenant des échangeurs cationiques greffés sur l'une de ses deux faces.

On comprend dans le présent texte par membrane anionique toute membrane se laissant traverser par des anions (mono et/ou multivalents), et donc ne se laissant pas traverser par des cations, et par membrane cationique toute membrane se laissant traverser par des cations (mono et/ou multivalents), et donc ne se laissant pas traverser par des anions.

Le dispositif d'électrodialyse bipolaire (EDBP1) comprend une pluralité de cellules similaires à ladite au moins une cellule définie ci-avant, en particulier au moins 5 cellules, plus particulièrement au moins 25 cellules, de préférence d'environ 25 cellules à environ 400 cellules.

Avantageusement, le dispositif d'électrodialyse bipolaire comprend une anode et une cathode disposées de part et d'autre d'un empilement de cellules (par exemple comprenant d'environ 25 cellules à environ 400 cellules).

Avantageusement, la membrane anionique centrale de ladite au moins une cellule est une membrane anionique échangeuse d'anions monovalents et/ou multivalents.

Dans un mode de réalisation, la composition aqueuse (A) comprenant du sulfate de lithium et du sulfate de sodium de l'étape a) a une teneur massique en cations multivalents, notamment en cations divalents, inférieure ou égale à 5 ppm (ou à 5 mg de cations/Kg de la composition (A)). Ladite teneur massique est calculée par rapport à la masse totale de la composition aqueuse (A) incluant l'eau.

Dans le présent texte, 1 ppm est égal à 1 mg/Kg.

Dans un mode de réalisation, la composition aqueuse (A) de l'étape a) est issue d'un procédé de purification et de concentration en sel de lithium, notamment en sulfate de lithium.

Dans un mode de réalisation, la composition aqueuse (A) comprenant du sulfate de lithium, et du sulfate de sodium de l'étape a), ou alimentée au second compartiment de ladite au moins une cellule de l'EDBP1, comprend (ou est constituée essentiellement de) une ou plusieurs solution(s) aqueuse(s) sélectionnée(s) dans la liste comprenant : une solution d'extraction de lithium dissous dans de l'eau de mer, des saumures comprenant du lithium, par exemple des salars, ou un fluide géothermal comprenant du lithium, une solution issue d'un procédé de recyclage d'une batterie au lithium, une solution issue du traitement de spodumène, ou un mélange de ces derniers.

Dans un mode de réalisation, l'eau alimentée au premier compartiment de ladite au moins une cellule d'électrodialyse de l'électrodialyseur de l'EDBP1 est de l'eau déminéralisée, ou osmosée, ou de l'eau adoucie ou est issue de la condensation des vapeurs de l'étape de cristallisation par évaporation c), ou encore est issue d'un mélange de ces derniers.

Dans un mode de réalisation, la température de l'eau alimentée au premier compartiment de ladite au moins une cellule d'électrodialyse de l'électrodialyseur de l'EDBP1 est supérieure ou égale à 5°C et inférieure ou égale à 65°C, en particulier est sensiblement égale à la température ambiante, plus particulièrement est supérieure ou égale à environ 15°C et inférieure ou égale à environ 50°C ou 40°C. De préférence, le pH de l'eau alimentée au premier compartiment de ladite au moins une cellule d'électrodialyse de l'électrodialyseur de l'EDBP1, en particulier avant l'extraction des ions sulfates, est supérieur ou égal à 5 et inférieur ou égal à 7.5. Dans un mode de réalisation, la température de la composition aqueuse (A) comprenant du sulfate de lithium et du sulfate de sodium alimentée au second compartiment de ladite au moins une cellule d'électrodialyse de l'électrodialyseur de l'EDBP1 est supérieure ou égale à 5°C et inférieure ou égale à 65°C, en particulier est sensiblement égale à la température ambiante, plus particulièrement est supérieure ou égale à environ 15°C et inférieure ou égale à 50°C ou 40°C. Avantageusement, la composition aqueuse (A) comprend du sulfate de lithium, du sulfate de sodium, et éventuellement de l'hydroxyde de lithium et/ou de l'hydroxyde de sodium (en particulier en faibles quantités). De préférence, la fraction massique en sulfate de lithium et en sulfate de sodium mesurée sur l'extrait sec en masse de la composition aqueuse (A) est supérieure ou égale à 80%, encore de préférence supérieure ou égale à 90%, préférentiellement supérieur ou égal à 95%. Avantageusement, l'étape de cristallisation c) est une étape de séparation permettant la formation d'un sel, en particulier d'hydroxyde de lithium ou de sulfate de sodium, d'une part, et la formation d'une liqueur d'autre part, en particulier enrichie en sulfate de sodium ou en hydroxyde de lithium (selon le sel extrait en parallèle). Avantageusement, le sel cristallisé est le composant majoritaire dans la composition aqueuse (B).

Dans une variante de réalisation, la composition aqueuse (A), comprenant du sulfate de lithium et du sulfate de sodium alimentée en entrée du second compartiment de ladite au moins une cellule d'électrodialyse de l'électrodialyseur à membranes bipolaires (EDBP1) à l'étape a), a un pH supérieur ou égal à 4, de préférence supérieur ou égal à 4 et inférieur ou égal à 11, encore de préférence inférieur ou égal à 10.5, encore de préférence inférieur ou égal à 10, préférentiellement supérieur ou égal à 5 ou 6, éventuellement inférieur ou égal à 8.

Dans une variante de réalisation, la composition aqueuse (B), comprenant de l'hydroxyde de lithium et du sulfate de sodium en sortie du second compartiment de ladite au moins une cellule d'électrodialyse de l'électrodialyseur à membranes bipolaires (EDBP1) à l'étape a), notamment de l'électrodialyseur de l'EDBP1, a un pH supérieur ou égal à 9, de préférence supérieur ou égal à 10, encore de préférence supérieur ou égal à 11.

Avantageusement, l'étape a) (EDBP1) augmente le pH de la composition aqueuse (A) de l'étape a) car les ions hydroxyles OH⁻ s'accumulent dans le second compartiment et forment du LiOH et les protons H⁺ restent majoritairement dans le premier compartiment et forment du H₂SO₄.

Dans une variante de réalisation, la conductivité (mS/cm) de la composition aqueuse (A) alimentée en entrée du second compartiment de l'électrodialyseur (EDBP1) de l'étape a) est supérieure ou égale à 50 mS/cm.

Dans une variante de réalisation, la conductivité (mS/cm) de la composition aqueuse (B) en sortie du second compartiment de l'électrodialyseur (EDBP1) de l'étape a) est supérieure à la conductivité de la composition aqueuse (A) en entrée du second compartiment dudit électrodialyseur (EDBP1) de l'étape a), de préférence est supérieure ou égale à 100 mS/cm, encore de préférence supérieure ou égale à 150 mS/cm.

Dans une variante de réalisation, la composition aqueuse en sortie du premier compartiment de ladite au moins une cellule d'électrodialyse de l'électrodialyseur à membranes bipolaires (EDBP1) à l'étape a) comprend de l'acide sulfurique, de préférence ladite composition aqueuse a un pH inférieur ou égal à 2, encore de préférence inférieur ou égal à 1.

De préférence, cet acide peut être valorisé ou réutilisé dans d'autres lignes de procédé, notamment du procédé selon l'invention.

Dans une variante de réalisation, la composition aqueuse en sortie du premier compartiment de ladite au moins une cellule d'électrodialyse de l'électrodialyseur à membranes bipolaires (EDBP1) à l'étape a) comprend de l'acide sulfurique à une concentration massique supérieure ou égale à 1% et inférieure ou égale à 12%, en particulier inférieure ou égale à 10%, éventuellement supérieure ou égale à 2% ou à 4% ou à 6% ou à 8%.

On comprend dans le présent texte par concentration massique en acide sulfurique de x% dans une composition aqueuse donnée que cette composition aqueuse comprend x g d'acide sulfurique pour 100g de composition aqueuse comprenant ledit acide sulfurique.

Dans un mode de réalisation, la composition aqueuse en sortie du premier compartiment de ladite au moins une cellule d'électrodialyse de l'électrodialyseur à membranes bipolaires (EDBP1) à l'étape a) comprend de l'acide sulfurique à une concentration massique supérieure ou égale à 1% et inférieure ou égale à 4%.

Dans une variante de réalisation, le rapport de la masse (g) des ions lithium et des ions sodium sur la masse totale (g) des cations dans la composition aqueuse (A), comprenant du sulfate de lithium et du sulfate de sodium et alimentée en entrée du second compartiment de ladite au moins une cellule d'électrodialyse de l'électrodialyseur à membranes bipolaires (EDBP1) à l'étape a), est supérieur ou égal à 95%.

Dans une variante de réalisation, le rapport de la masse (g) des ions lithium et des ions sodium sur la masse totale sèche (g) de la composition aqueuse (A), comprenant du sulfate de lithium et du sulfate de sodium et alimentée en entrée du second compartiment de ladite au moins une cellule d'électrodialyse de l'électrodialyseur à membranes bipolaires (EDBP1) à l'étape a), est supérieur ou égal à 80%, de préférence supérieur ou égal à 90%, encore de préférence supérieur ou égal à 95%.

Dans une variante de réalisation, le ratio massique (g/g) entre les ions lithium et les ions sodium (Li/Na) dans la composition aqueuse (A), comprenant du sulfate de lithium et du sulfate de sodium et alimentée en entrée du second compartiment de ladite au moins une cellule d'électrodialyse de l'électrodialyseur à membranes bipolaires (EDBP1) à l'étape a), est supérieur ou égal à 0,1 et inférieur ou égal à 9, de préférence supérieur ou égal à 0,4 et inférieur ou égal à 2,3 ; encore de préférence supérieur ou égal à 0,66 et inférieur ou égal à 1,5, préférentiellement supérieur ou égal 0,8 et inférieur ou égal à 1,3; encore préférentiellement supérieure ou égale à 0,8 et inférieur ou égal à 1,2 ; en particulier supérieur ou égal à 0,9 et inférieur ou égal à 1,1 ; plus particulièrement supérieur ou égal à 0,95 et inférieur ou égal à 1,05.

Dans une variante de réalisation, le rapport de la masse (g) des ions sulfates (SO₄²⁻) et des ions hydroxyles (OH⁻), par rapport à la masse totale (g) des anions dans la composition aqueuse (A), comprenant du sulfate de lithium et du sulfate de sodium et alimentée en entrée du second compartiment de ladite au moins une cellule d'électrodialyse de l'électrodialyseur à membranes bipolaires (EDBP1) à l'étape a), est supérieur ou égal à 95%.

Dans une variante de réalisation, le rapport de la masse (g) des ions sulfates (SO₄²⁻) et des ions hydroxyles (OH⁻), par rapport à la masse sèche totale (g) de la composition aqueuse (A), comprenant du sulfate de lithium et du sulfate de sodium et alimentée en entrée du second compartiment de ladite au moins une cellule d'électrodialyse de l'électrodialyseur à membranes bipolaires (EDBP1) à l'étape a), est supérieur ou égal à 80%, de préférence supérieure ou égal à 90%, encore de préférence supérieur ou égal à 95%.

Les fractions massiques en ions sont calculées dans le présent texte par rapport à la masse sèche totale de la composition (A) de l'étape a) ou la masse totale en anions ou en cations de la composition (A) de l'étape a).

Les fractions massiques en ions lithium et ions sodium, et en ions sulfates, précitées permettent avantageusement d'effectuer une EDBP1 à deux compartiments anionique.

Dans une variante de réalisation, la composition aqueuse (A) comprenant le sulfate de lithium et le sulfate de sodium et alimentée au second compartiment de ladite au moins une cellule d'électrodialyse de l'électrodialyseur à membranes bipolaires (EDBP1) à l'étape a) a un extrait sec massique supérieur ou égal à 2% et inférieur ou égal à 20%, en particulier inférieur ou égal à 15%, plus particulièrement supérieur ou égal à 5%.

Dans une variante de réalisation, le ratio massique entre les ions lithium et les ions sodium (Li/Na) dans la composition aqueuse (B), provenant du second compartiment de ladite au moins une cellule d'électrodialyse de l'électrodialyseur à membranes bipolaires (EDBP1) à l'étape a), est similaire (en particulier à +/- 10% près) au ratio massique entre les ions lithium et les ions sodium (Li/Na) de la composition aqueuse (A) alimentée à l'entrée du second compartiment de ladite au moins une cellule d'électrodialyse de l'électrodialyseur à membranes bipolaires (EDBP1) à l'étape a). En effet, les ions lithium et sodium ne sont pas extraits de la composition aqueuse (A) lors de l'électrodialyse de l'étape a) (EDBP1).

Dans une variante de réalisation, la densité de courant (mA/cm²) appliquée dans l'étape d'électrodialyse à membranes bipolaires (EDBP1) à l'étape a), ou dans l'étape d'électrodialyse à membranes bipolaires (EDBP2) (en particulier décrite ci-après), est supérieure ou égale à 50 mA/cm², de préférence inférieure ou égale à 100 mA/cm², en particulier supérieure ou égale à 60 mA/cm² et inférieure ou égale à 90 mA/cm².

Il s'agit de la quantité de courant (A) appliquée par surface (cm²) de membrane échangeuse d'ions.

Dans une variante de réalisation, la quantité d'ions sulfates extraits de la composition (A) à l'étape a) est environ égale à la quantité, en équivalent molaire, en ions lithium présents en solution dans ladite composition (A), par exemple 1 mole d'ions sulfates extraite correspond à 2 moles d'ions lithium libérés et complexés potentiellement par les ions hydroxyles.

Dans une variante de réalisation, l'étape de cristallisation c) d'un sel est une étape de cristallisation, notamment par évaporation, d'un sel d'hydroxyde de lithium pour l'obtention d'un sel d'hydroxyde de lithium d'une part et d'une liqueur mère (I) comprenant du sulfate de sodium et de l'hydroxyde de lithium d'autre part.

De préférence, dans ce cas le ratio massique (g/g) Li/Na est élevé dans la composition (A), en particulier supérieur ou égal à 0.8, plus particulièrement supérieur ou égal à 0.9 ou à 1.

Lorsque la concentration massique en lithium est environ équivalente, ou supérieure, à la concentration massique en sodium dans la composition (B), il est possible avantageusement de débuter par une cristallisation par évaporation pour la formation d'un sel d'hydroxyde de lithium solide impur.

Dans un mode de réalisation, l'étape de cristallisation par évaporation c) est effectuée par chauffage de la composition aqueuse (B) à une température supérieure ou égale à 30°C, plus particulièrement inférieure ou égale à 110°C, par exemple allant de 50°C à 70°C, jusqu'à l'obtention d'un sel d'hydroxyde de lithium solide. Avantageusement, la liqueur mère (I) obtenue à l'étape de cristallisation par évaporation c) a une concentration massique en sulfates de sodium supérieure ou égale à 5% et inférieure ou égale à 30%, de préférence supérieure ou égale à 8% et inférieure ou égale à 25%, encore de préférence supérieure ou égale à 10% et inférieure ou égale à 20%, préférentiellement inférieure ou égale à 18%, notamment inférieure ou égale à 16%.

Avantageusement, la liqueur mère (I) obtenue à l'étape de cristallisation par évaporation c) a une concentration massique en hydroxyde de lithium (LiOH) supérieure ou égale à 3% et inférieure ou égale à 20%, de préférence supérieure ou égale à 5% et inférieure ou égale à 15%, encore de préférence supérieure ou égale à 6% et inférieure ou égale à 10%.

Les concentrations massiques sont calculées en rapportant la masse sèche en sulfates de sodium ou en hydroxyde de lithium par rapport à la masse totale de la liqueur mère (I) (en particulier dont l'eau).

Dans une variante, ledit procédé comprend une étape de dissolution d) d'au moins une partie du sel d'hydroxyde de lithium obtenu à l'étape c) pour la formation d'une composition aqueuse (C) comprenant ledit sel d'hydroxyde de lithium dissous, et ledit procédé comprend en outre une étape de cristallisation e), notamment par évaporation, d'au moins une partie de la composition aqueuse (C) pour l'obtention de cristaux d'hydroxyde de lithium, et éventuellement d'une liqueur mère (II), en particulier lesdits cristaux d'hydroxyde de lithium subissent une étape de séchage f), plus particulièrement pour l'obtention de cristaux d'hydroxyde de lithium monohydraté.

De préférence, la liqueur mère (II) est riche en hydroxyde de lithium, et comprend des traces de sulfate de sodium.

Avantageusement, la liqueur mère (II) obtenue à l'étape de cristallisation e) par évaporation a une concentration massique en hydroxyde de lithium (LiOH) supérieure ou égale à 6% et inférieure ou égale à 30%, de préférence supérieure ou égale à 8% et inférieure ou égale à 25%, encore de préférence supérieure ou égale à 10% et inférieure ou égale à 20%, en particulier supérieure ou égale à 12% et inférieure ou égale à 17%.

Avantageusement, la liqueur mère (II) obtenue à l'étape de cristallisation e) par évaporation a une concentration massique en sulfate de sodium inférieure ou égale à 10%, de préférence inférieure ou égale à 8%, encore de préférence inférieure ou égale à 6% ou à 4% ou à 3%, en particulier inférieure ou égale à 2%. Avantageusement, l'étape de dissolution d) dans de l'eau dudit sel d'hydroxyde de lithium est effectuée en sorte que la concentration massique en hydroxyde de lithium soit inférieure à la solubilité du LiOH.

Avantageusement, la concentration massique en LiOH dans la composition aqueuse (C) préparée lors de l'étape de dissolution d) est supérieure ou égale à 1% et inférieure ou égale à 15%, de préférence inférieure ou égale à 12%, encore de préférence inférieure ou égale à 8%, en particulier supérieure ou égale à 3%.

Avantageusement, l'étape de cristallisation e), notamment par évaporation comprend le chauffage de la composition aqueuse (C), éventuellement suivie d'une étape de séchage f), jusqu'à l'obtention de cristaux d'hydroxyde de lithium monohydraté (LiOH, H₂O).

De préférence, l'étape de cristallisation par évaporation e) est effectuée par chauffage de la composition aqueuse (C) à une température supérieure ou égale à 30°C, plus particulièrement inférieure ou égale à 110°C, par exemple allant de 50°C à 70°C.

Les concentrations massiques sont mesurées en rapportant la masse en sulfate de sodium ou en LiOH sur la masse totale de la liqueur mère (incluant l'eau) ou de la composition aqueuse (incluant l'eau) issue de la dissolution.

Les inventeurs ont observé que les eaux mères qui entourent le sel de lithium produit lors de la première cristallisation par évaporation c) sont chargées en sulfate de sodium (Na₂SO₄) ce qui peut nuire à la forme cristalline des cristaux obtenus. De plus, ces eaux mères apportent une quantité non négligeable de Na₂SO₄. La re-dissolution du sel d'hydroxyde de lithium lors de la première dissolution d) permet de générer une liqueur mère (II) nettement moins riche en Na₂SO₄ que la liqueur mère (I) obtenue à la première cristallisation par évaporation. Avantageusement, les cristaux obtenus à la seconde cristallisation par évaporation e) sont nettement plus purs. La réalisation d'une seconde cristallisation par évaporation e) permet donc de produire des cristaux de LiOH monohydraté de grande pureté, et une liqueur mère (II) appauvrie en sulfate de sodium et donc enrichie en LiOH.

Avantageusement, l'hydroxyde de lithium monohydraté obtenu a une pureté supérieure ou égale à 95% ou à 97% ou à 98% ou à 99% ou à 99,5%.

Le degré de pureté est de préférence évalué en rapportant la masse de LiOH monohydraté sur la masse totale des cristaux obtenus.

Dans une variante de réalisation, l'étape de cristallisation par évaporation e) produit une liqueur mère (II) comprenant du sulfate de sodium et de l'hydroxyde de lithium, au moins une partie de la liqueur mère (II), éventuellement en mélange avec au moins une partie de la composition aqueuse (B) comprenant de l'hydroxyde de lithium et du sulfate de sodium, est soumise à la première cristallisation par évaporation c).

Dans une variante de réalisation, ledit procédé comprend une étape de cristallisation g), notamment par refroidissement, d'au moins une partie de la liqueur mère (I) obtenue à l'étape de cristallisation c), pour l'obtention d'un sel de Glaüber et d'une liqueur mère (III) comprenant du sulfate de sodium et de l'hydroxyde de lithium.

Avantageusement, l'étape de cristallisation par refroidissement g) comprend l'application d'une température supérieure ou égale à -20°C et inférieure ou égale à 25°C, plus particulièrement d'une température supérieure ou égale à -10°C et inférieure ou égale à 15°C.

On comprend dans le présent texte par sel de Glaüber, le sulfate de sodium de formule (Na₂SO₄ ; 10H₂O).

Avantageusement, la liqueur mère (III) est appauvrie en sulfate de sodium.

Dans une variante de réalisation, l'étape de cristallisation c) d'un sel est une étape de cristallisation, notamment par refroidissement, d'un sel de sulfate de sodium (Na₂SO₄) pour l'obtention d'un sel de Glaüber d'une part et d'une liqueur mère (III') comprenant de l'hydroxyde de lithium et du sulfate de sodium d'autre part.

De préférence, dans ce cas le ratio massique Li/Na est faible dans la composition (A), en particulier inférieur ou égal à 0.8.

L'étape de cristallisation c) par refroidissement peut être effectuée dans les mêmes conditions de température que l'étape de cristallisation g) par refroidissement. Lorsque la concentration massique en lithium est trop faible dans la composition (A), il est possible avantageusement de débuter par une cristallisation par refroidissement pour la formation d'un sel de sulfate de sodium.

Dans une variante de réalisation, ledit procédé comprend :
- une étape de dissolution h) ou h*'*) de tout ou partie du sel de Glaüber, en particulier provenant de l'étape de cristallisation par refroidissement g) ou c), en sorte de former une composition aqueuse (D) ou (D') comprenant du sulfate de sodium, et
- le traitement j) ou j*'*) d'au moins une partie de ladite composition aqueuse (D) ou (D') comprenant du sulfate de sodium par une électrodialyse à membranes bipolaires (EDBP2) pour l'extraction des ions sulfates d'une part et la formation d'acide sulfurique, et l'extraction des ions sodium d'autre part et la formation d'hydroxyde de sodium.

Avantageusement, l'électrodialyse à membranes bipolaires (EDBP2) est effectuée sur un électrodialyseur comprenant au moins une cellule d'électrodialyse, ladite au moins une cellule d'électrodialyse comprend (notamment est constituée essentiellement de) trois compartiments, et comprend des premières et seconde membranes bipolaires, une première membrane anionique, et une première membrane cationique. Avantageusement, ladite au moins une cellule d'électrodialyse comprend (notamment est constituée essentiellement de):
- un premier compartiment alimenté en eau circulant entre une première membrane bipolaire et une membrane anionique, en particulier la première membrane bipolaire a une face anionique orientée vers l'anode de l'électrodialyseur, et une face cationique orientée vers la membrane anionique ;
- un second compartiment alimenté avec la composition aqueuse (D) ou (D') comprenant du sulfate de sodium circulant entre la membrane anionique et une membrane cationique ; et
- un troisième compartiment alimenté en eau circulant entre la membrane cationique et une seconde membrane bipolaire ; en particulier la seconde membrane bipolaire a une face anionique orientée vers la membrane cationique, et une face cationique orientée vers la cathode de l'électrodialyseur.

Avantageusement, le second compartiment est disposé entre les premier et troisième compartiments.

Avantageusement, la composition aqueuse en sortie du premier compartiment comprend de l'acide sulfurique, et la composition aqueuse en sortie du troisième compartiment comprend de la soude (NaOH).

Avantageusement, la composition aqueuse (D) ou (D') comprenant du sulfate de sodium en entrée du second compartiment de ladite au moins une cellule de l'électrodialyseur (EDBP2) est appauvrie en sulfate de sodium.

Dans une variante, ledit procédé comprend :
- une étape de préparation d'une composition aqueuse (D) ou (D') à partir de tout ou partie du sel de Glaüber, en particulier une étape de dissolution h) ou h*'*) de tout ou partie du sel de Glaüber en sorte de former une composition aqueuse (D) ou (D') comprenant du sulfate de sodium ou une étape de chauffage du sel de Glaüber en sorte en sorte de former une composition aqueuse (D) ou (D') comprenant du sulfate de sodium, notamment sous forme d'une bouillie dudit sel de Glaüber, et
- une étape de cristallisation i) ou i*'*), notamment par évaporation, d'au moins une partie de ladite composition aqueuse (D) ou (D') comprenant du sulfate de sodium, pour obtenir un sel de sulfate de sodium anhydre et une liqueur mère IV) ou IV*'*) comprenant du sulfate de sodium, et éventuellement des traces d'hydroxyde de lithium, et ladite étape de cristallisation i) ou i*'*) est éventuellement suivie d'une étape de séchage k) ou k*'*) du sel de sulfate de sodium obtenu à l'étape de cristallisation i) ou i*'*).

Avantageusement, l'étape de cristallisation par évaporation i) ou i*'*) comprend le chauffage de la composition aqueuse (D) ou (D') comprenant du sulfate de sodium à une température supérieure ou égale à 50°C et inférieure ou égale à 110°C, de préférence à une température supérieure ou égale à 60°C et inférieure ou égale à 90°C, par exemple de l'ordre de 80°C +/- 5°C.

Dans une variante de réalisation, l'étape de cristallisation par refroidissement g) ou c) est effectuée en sorte de produire une liqueur mère (III) ou (III') comprenant :
- du sulfate de sodium, notamment dont la concentration massique (en particulier calculée par rapport à la masse totale de la liqueur incluant l'eau) est supérieure ou égale à 5%, et inférieure ou égale à 30%, de préférence supérieure ou égale à 8% ou à 10% et inférieure ou égale à 25% ou à 20%, encore de préférence inférieure ou égale à 16% ; et/ou
- de l'hydroxyde de lithium, notamment dont la concentration massique (en particulier calculée par rapport à la masse totale de la liqueur incluant l'eau) est supérieure ou égale à 3%, et inférieure ou égale à 20%, de préférence supérieure ou égale à 4% ou à 6% et inférieure ou égale à 20% ou à 15%, encore de préférence inférieure ou égale à 10%.

Dans une variante de réalisation, la composition aqueuse (D) ou (D') comprenant du sulfate de sodium obtenue par dissolution d'au moins une partie du sel de Glaüber obtenu à l'étape de cristallisation c) ou g), a une concentration massique en sulfate de sodium (en particulier calculée par rapport à sa masse totale incluant l'eau) supérieure ou égale à 10% et inférieure ou égale à 40%, de préférence supérieure ou égale 20% et inférieure ou égale à 35%, encore de préférence supérieure ou égale à 24% et inférieure ou égale à 30%, en particulier à une température allant de 15°C à 40°C, plus particulier à une température allant de 25°C à 40°C, par exemple de l'ordre de 35°C à +/- 2°C près.

Avantageusement, la concentration massique en sulfate de sodium dans la composition (D) ou (D') est déterminée en fonction de la température de la composition aqueuse et afin d'être inférieure au seuil de solubilité du sulfate de sodium.

La composition aqueuse (D) ou (D') ainsi préparée par dissolution d'au moins une partie du sel de Glaüber peut subir une électrodialyse à membranes bipolaires j) ou j') ou une cristallisation par évaporation i) ou i*'*) comme décrit ci-avant.

Dans une variante de réalisation, l'étape de cristallisation par évaporation i) ou i*'*) est effectuée en sorte de produire une liqueur mère (IV) ou (IV') comprenant :
- du sulfate de sodium, notamment dont la concentration massique (en particulier calculée par rapport à la masse totale de la liqueur incluant l'eau) est supérieure ou égale à 15%, et inférieur ou égal à 44%, de préférence supérieur ou égal à 20% ou à 25% et inférieure ou égale à 30%, par exemple de l'ordre de 26% à +/- 2%; et
- de l'hydroxyde de lithium, notamment dont la concentration massique (en particulier calculée par rapport à la masse totale de la liqueur incluant l'eau) est inférieure ou égale à 10%, de préférence et inférieure ou égale à 5%, encore de préférence inférieure ou égale à 3% ou à 2%.

Dans une variante, au moins une partie de la liqueur mère (III) ou (III') obtenue à l'étape de cristallisation g) ou c), notamment par refroidissement, du sulfate de sodium Na₂SO₄, subit une étape de cristallisation, notamment par évaporation, de l'hydroxyde de lithium (LiOH), en particulier il s'agit de l'étape de l'étape de cristallisation c) (notamment telle que décrite ci-avant) ou d'une étape de cristallisation c*'*), plus particulièrement pour l'obtention d'un sel d'hydroxyde de lithium d'une part (notamment impur) et de la liqueur mère (I) (notamment telle que décrite ci-avant) ou d'une liqueur mère (I') comprenant du sulfate de sodium et de l'hydroxyde de lithium d'autre part.

De préférence, dans ce cas le ratio massique Li/Na dans la liqueur mère III ou III' est élevé, en particulier supérieur ou égal à 0.8, plus particulièrement supérieur ou égal à 0.9 ou à 1.

Dans un mode de réalisation, l'étape de cristallisation par évaporation c*'*) est effectuée par chauffage de la liqueur mère (III') à une température supérieure ou égale à 30°C, plus particulièrement inférieure ou égale à 110°C, par exemple allant de 50°C à 70°C, jusqu'à l'obtention d'un sel d'hydroxyde de lithium solide. Avantageusement, la liqueur mère (I') obtenue à l'étape de cristallisation par évaporation c*'*) a une concentration massique en sulfates de sodium supérieure ou égale à 5% et inférieure ou égale à 30%, de préférence supérieure ou égale à 8% et inférieure ou égale à 25%, encore de préférence supérieure ou égale à 10% et inférieure ou égale à 20%, préférentiellement inférieure ou égale à 18%, notamment inférieure ou égale à 16%.

Avantageusement, la liqueur mère (I*'*) obtenue à l'étape de cristallisation par évaporation c*'*) a une concentration massique en hydroxyde de lithium (LiOH) supérieure ou égale à 3% et inférieure ou égale à 20%, de préférence supérieure ou égale à 5% et inférieure ou égale à 15%, encore de préférence supérieure ou égale à 6% et inférieure ou égale à 10%.

Les concentrations massiques sont calculées en rapportant la masse sèche en sulfates de sodium ou en hydroxyde de lithium par rapport à la masse totale de la liqueur mère (I) (en particulier dont l'eau).

Dans une variante, ledit procédé comprend une étape de dissolution d*'*) d'au moins une partie du sel d'hydroxyde de lithium obtenu à l'étape de cristallisation c*'*) pour la formation d'une composition aqueuse (C') comprenant ledit sel d'hydroxyde de lithium dissous, et ledit procédé comprend une étape de cristallisation e*'*), notamment par évaporation, d'au moins une partie de la composition aqueuse (C*'*) pour l'obtention de cristaux d'hydroxyde de lithium, et éventuellement d'une liqueur mère (II'), en particulier lesdits cristaux d'hydroxyde de lithium subissent une étape de séchage f*'*), plus particulièrement pour l'obtention de cristaux d'hydroxyde de lithium monohydraté.

De préférence, la liqueur mère (II') est riche en hydroxyde de lithium, et comprend des traces de sulfate de sodium.

Avantageusement, la liqueur mère (II') obtenue à l'étape de cristallisation e*'*) par évaporation a une concentration massique en hydroxyde de lithium (LiOH) supérieure ou égale à 6% et inférieure ou égale à 30%, de préférence supérieure ou égale à 8% et inférieure ou égale à 25%, encore de préférence supérieure ou égale à 10% et inférieure ou égale à 20%, en particulier supérieure ou égale à 12% et inférieure ou égale à 17%.

De préférence, l'étape de cristallisation par évaporation e*'*) est effectuée par chauffage de la composition aqueuse (C') à une température supérieure ou égale à 30°C, plus particulièrement inférieure ou égale à 110°C, par exemple allant de 50°C à 70°C.

Avantageusement, la liqueur mère (II') obtenue à l'étape de cristallisation e*'*) par évaporation a une concentration massique en sulfate de sodium inférieure ou égale à 10%, de préférence inférieure ou égale à 8%, encore de préférence inférieure ou égale à 6% ou à 4% ou à 3%, en particulier inférieure ou égale à 2%. Avantageusement, l'étape de dissolution d*'*) dans de l'eau dudit sel d'hydroxyde de lithium est effectuée en sorte que la concentration massique en hydroxyde de lithium soit inférieure à la solubilité du LiOH.

Avantageusement, la concentration massique en LiOH dans la composition aqueuse (C') préparée lors de l'étape de dissolution d*'*) est supérieure ou égale à 1% et inférieure ou égale à 15%, de préférence inférieure ou égale à 12%, encore de préférence inférieure ou égale à 8%, en particulier supérieure ou égale à 3%. Avantageusement, l'étape de cristallisation e*'*), notamment par évaporation comprend le chauffage de la composition aqueuse (C'), éventuellement suivie d'une étape de séchage f*'*), jusqu'à l'obtention de cristaux d'hydroxyde de lithium monohydraté (LiOH, H₂O).

Les concentrations massiques sont mesurées en rapportant la masse en sulfate de sodium ou en LiOH sur la masse totale de la liqueur mère (incluant l'eau) ou de la composition aqueuse (incluant l'eau) issue de la dissolution.

Les inventeurs ont observé que les eaux mères qui entourent le sel de lithium produit lors de la cristallisation par évaporation c*'*) sont chargées en sulfate de sodium (Na₂SO₄) ce qui peut nuire à la forme cristalline des cristaux obtenus. De plus, ces eaux mères apportent une quantité non négligeable de Na₂SO₄. La re-dissolution du sel d'hydroxyde de lithium lors de la dissolution d*'*) permet de générer une liqueur mère (II') nettement moins riche en Na₂SO₄ que la liqueur mère (I') obtenue à la cristallisation par évaporation c*'*). Avantageusement, les cristaux obtenus à la cristallisation par évaporation e*'*) sont nettement plus purs. La réalisation d'une seconde cristallisation par évaporation e*'*) permet donc de produire des cristaux de LiOH monohydraté de grande pureté, et une liqueur mère (II') appauvrie en sulfate de sodium et donc enrichie en LiOH.

Avantageusement, l'hydroxyde de lithium monohydraté obtenu a une pureté supérieure ou égale à 95% ou à 97% ou à 98% ou à 99% ou à 99,5%.

Le degré de pureté est de préférence évalué en rapportant la masse de LiOH monohydraté sur la masse totale des cristaux obtenus.

Dans une variante, au moins une partie de la liqueur mère (IV) ou (IV') obtenue à l'étape de cristallisation i) ou i*'*), notamment par évaporation, d'au moins une partie de la composition aqueuse (D) ou (D') provenant au moins en partie de la dissolution de sel de Glaüber, subit une étape de cristallisation g) ou c), notamment par refroidissement, éventuellement en mélange avec au moins une partie de la composition aqueuse (B).

Dans une variante de réalisation, au moins une partie du sel de Glaüber obtenu à l'étape de cristallisation par refroidissement c) ou g) est chauffée, en particulier à une température supérieure ou égale à 25°C, plus particulièrement supérieure ou égale à 31°C.

Avantageusement, on obtient une bouillie de sulfate de sodium anhydre dans une solution saturée en sulfate de sodium.

Avantageusement, lors du chauffage, le sel de Glaüber relarge son eau de constitution permettant la formation de ladite bouillie. Cette étape s'appelle le 'meltage', ou fonte, de l'anglais 'Melt'.

Avantageusement, ledit procédé comprend une étape de cristallisation par évaporation de ladite bouillie pour cristalliser l'ensemble du sulfate de sodium. Néanmoins, cette voie est plus délicate à mettre en oeuvre pour obtenir de beaux cristaux de sulfate de sodium.

Dans une variante, au moins une partie de la liqueur mère (I'), obtenue à l'étape de cristallisation par évaporation c*'*), est traitée à l'étape de cristallisation par refroidissement c), éventuellement en mélange avec au moins une partie de la composition aqueuse (B).

Dans une variante, au moins une partie de la liqueur mère (II) ou (II*'*), obtenue à l'étape de cristallisation (e) ou (e') par évaporation, est traitée à l'étape de cristallisation par évaporation c) ou c*'*), éventuellement en mélange avec au moins une partie de la composition aqueuse (B) et/ou en mélange avec au moins une partie de la liqueur mère (III) ou (III').

Dans une variante de réalisation, la composition aqueuse comprenant le sulfate de lithium et le sulfate de sodium alimentée en entrée du second compartiment de ladite au moins une cellule d'électrodialyse de l'électrodialyseur à membranes bipolaires (EDBP1) de l'étape a) a subi un traitement préalable d'extraction des cations divalents, en particulier des ions calcium et des ions magnésium.

Dans une variante, les première et seconde membranes bipolaires de ladite au moins une cellule de l'EDBP1 ou de l'EDBP2, et la membrane anionique centrale, ou encore les membranes cationique et anionique de ladite au moins cellule de l'EDBP2, sont des membranes polymériques.

Avantageusement, la membrane anionique, notamment centrale, de l'EDBP1 à l'étape a), est une membrane de la marque Neosepta^{®} AHA. Néanmoins, toute membrane anionique peut convenir à la mise en oeuvre de l'électrodialyseur de l'EDBP1.

Avantageusement, la membrane bipolaire de l'EDBP1 à l'étape a), est une membrane de la marque Neosepta^{®} BP. Néanmoins, toute membrane bipolaire peut convenir à la mise en oeuvre de l'électrodialyseur de l'EDBP 1.Dans une variante, la première membrane bipolaire, ou indifféremment la seconde membrane bipolaire, de ladite au moins une cellule de l'EDBP1 ou de l'EDBP2, comprend une face cationique et donc échangeuse de cations, et une face anionique et donc échangeuse d'anions, qui sous un champ électrique permet de dissocier l'eau à une tension supérieure ou égale à 0,8 volts, et de préférence inférieure ou égale à 1,8 volts.

Dans une variante, la première membrane bipolaire, ou indifféremment la seconde membrane bipolaire, de ladite au moins une cellule de l'EDBP1 ou de l'EDBP2, ou indifféremment la membrane anionique centrale de ladite au moins une cellule de l'EDBP1, ou indifféremment les membranes anionique et cationique de ladite au moins une cellule de l'EDBP2, a/ont chacune une épaisseur supérieure ou égale à 30 µm et inférieure ou égale à 600 µm.

Dans une variante, la membrane anionique centrale de ladite au moins une cellule de l'EDBP1, ou indifféremment les membranes anionique et cationique de ladite au moins une cellule de l'EDBP2, est/sont chacune une membrane polymère sur laquelle des échangeurs de forme cationique ou anionique sont greffés de capacité d'échange supérieure ou égale à 1 eq/g.

La présente invention a pour objet, selon un second aspect, une installation pour la mise en oeuvre d'un procédé de préparation d'hydroxyde de lithium, notamment selon l'une quelconque des variantes de réalisation en référence au premier aspect de l'invention, comprenant :
a) un électrodialyseur (EDBP1) comprenant, en particulier dans cet ordre :
   - au moins une cellule comprenant, en particulier dans cet ordre : une première membrane bipolaire et une membrane anionique, en particulier une membrane anionique centrale, délimitant entre-elles un premier compartiment ayant une entrée pour l'admission d'eau et une sortie pour la sortie d'une composition aqueuse comprenant de l'acide sulfurique, et
   - une seconde membrane bipolaire délimitant avec une membrane anionique, notamment ladite membrane anionique centrale, un deuxième compartiment ayant une entrée pour l'admission d'une composition aqueuse (A) comprenant du sulfate de lithium et du sulfate de sodium et une sortie pour la sortie d'une composition aqueuse (B) comprenant du sulfate de sodium et de l'hydroxyde de lithium,
b) une unité de cristallisation d'un sel, notamment d'un sel d'hydroxyde de lithium ou d'un sel de sulfate de sodium, ladite unité de cristallisation d'un sel comprenant une entrée pour l'admission d'au moins une partie de la composition aqueuse (B) comprenant du sulfate de sodium et de l'hydroxyde de lithium, ladite au moins une partie de la composition (B) provenant du second compartiment de l'éléctrodialyseur (EDBP1).

Dans une variante de réalisation:
- l'unité de cristallisation d'un sel c) est une unité de cristallisation, notamment par évaporation, d'hydroxyde de lithium, comprenant une entrée pour l'admission d'au moins une partie de la composition aqueuse (B) comprenant du sulfate de sodium et de l'hydroxyde de lithium provenant du second compartiment de ladite au moins une cellule de l'électrodialyseur (EDBP1), et une première sortie pour la sortie d'hydroxyde de lithium solide et une seconde sortie pour la sortie d'une liqueur mère (I) comprenant du sulfate de sodium et de l'hydroxyde de lithium.

Dans une variante de réalisation:
- l'unité de cristallisation d'un sel c) est une unité de cristallisation, notamment par refroidissement, de sulfate de sodium, comprenant une entrée pour l'admission d'au moins une partie de la composition aqueuse (B) comprenant du sulfate de sodium et de l'hydroxyde de lithium provenant du second compartiment de ladite au moins une cellule de l'électrodialyseur (EDBP1), et une première sortie pour la sortie de sulfate de sodium solide, en particulier d'un sel de Glauber, et une seconde sortie pour la sortie d'une liqueur mère (III') comprenant du sulfate de sodium et de l'hydroxyde de lithium.

Dans une variante, ladite installation comprend:
- une unité de dissolution d), d'au moins une partie du sel d'hydroxyde de lithium provenant de l'unité de cristallisation c) pour la formation d'une composition aqueuse (C) comprenant ledit sel d'hydroxyde de lithium dissous, et
- une unité de cristallisation e), notamment par évaporation, comprenant une entrée pour l'admission d'au moins une partie de la composition aqueuse (C), et une première sortie pour la sortie de cristaux d'hydroxyde de lithium, et une seconde sortie pour la sortie d'une liqueur mère (II), en particulier ladite installation comprend en outre une unité de séchage f) desdits cristaux d'hydroxyde de lithium, plus particulièrement pour l'obtention de cristaux d'hydroxyde de lithium monohydraté.

Dans une variante, ladite installation comprend:
- une unité de cristallisation g), notamment par refroidissement, comprenant une entrée pour l'admission d'au moins une partie de la liqueur mère (I) provenant de l'unité de cristallisation c), et une première sortie pour la sortie d'un sel de sulfate de sodium, notamment d'un sel de Glaüber, ainsi qu'une seconde sortie pour la sortie d'une liqueur mère (III) comprenant du sulfate de sodium et de l'hydroxyde de lithium.

Dans une variante, ladite installation comprend:
- une unité de dissolution h) ou h*'*) d'au moins une partie du sel de sulfate de sodium, notamment du sel de Glaüber, pour la formation d'une composition aqueuse (D) ou (D') comprenant du sulfate de sodium, et
- un électrodialyseur à membranes bipolaires (EDBP2) pour le traitement j) ou j*'*) comprenant une entrée pour l'admission d'au moins une partie de ladite composition aqueuse (D) ou (D') comprenant du sulfate de sodium, et une première sortie pour la sortie d'acide sulfurique, et une seconde sortie pour la sortie d'hydroxyde de sodium. Dans une variante, ladite installation comprend :
- une unité de préparation h) ou h*'*) d'une composition aqueuse (D) ou (D') à partir d'au moins une partie du sel de sulfate de sodium, notamment du sel de Glaüber, en particulier une unité de dissolution h) ou h*'*) d'au moins une partie du sel de sulfate de sodium, notamment du sel de Glaüber, pour la formation d'une composition aqueuse (D) ou (D') comprenant du sulfate de sodium, et/ou une unité de chauffage d'au moins une partie du sel de Glaüber pour la formation d'une composition aqueuse (D) ou (D') sous forme de bouillie, et
- une unité de cristallisation i) ou i*'*), notamment par évaporation, comprenant une entrée pour l'admission d'au moins une partie de ladite composition aqueuse (D) ou (D') comprenant du sulfate de sodium, et une première sortie pour la sortie d'un sel de sulfate de sodium et une seconde sortie pour la sortie d'une liqueur mère (IV) ou (IV') comprenant du sulfate de sodium (et éventuellement des traces d'hydroxyde de lithium), ladite installation comprend éventuellement une unité de séchage k) ou k*'*) du sel de sulfate de sodium provenant de l'unité de cristallisation i) ou i*'*) pour l'obtention d'un sel de sulfate de sodium anhydre.

Dans une variante de réalisation, ladite installation comprend une unité d'acheminement d'au moins une partie de la liqueur mère (III) ou (III') provenant de l'unité de cristallisation g) ou c) par refroidissement, à l'unité de cristallisation c) ou l'unité de cristallisation c*'*), ladite unité de cristallisation c) ou c*'*) comprend une première sortie pour la sortie d'hydroxyde de lithium, et une seconde sortie pour la sortie de la liqueur mère (I) ou d'une liqueur mère (I').

Dans une variante, ladite installation comprend :
- une unité de dissolution d*'*), d'au moins une partie du sel d'hydroxyde de lithium provenant de l'unité de cristallisation c*'*) pour la formation d'une composition aqueuse (C') comprenant ledit sel d'hydroxyde de lithium dissous, et
- une unité de cristallisation e*'*), notamment par évaporation, comprenant une entrée pour l'admission d'au moins une partie de la composition aqueuse (C'), et une première sortie pour la sortie de cristaux d'hydroxyde de lithium, et une seconde sortie pour la sortie d'une liqueur mère (II'), en particulier ladite installation comprend en outre une unité de séchage f*'*) desdits cristaux d'hydroxyde de lithium. Dans une variante de réalisation, ladite installation comprend une unité d'acheminement d'au moins une partie de la liqueur mère (IV) ou (IV') provenant de l'unité de cristallisation i) ou i*'*) à l'unité de cristallisation g) ou c), notamment par refroidissement.

Les variantes de réalisation selon un premier aspect peuvent être combinées entre-elles, et avec les variantes de réalisation selon un second aspect.

### Méthodes de mesure - Définitions

On comprend dans le présent texte par extrait sec en masse, la masse sèche d'une composition aqueuse donnée, obtenue après évaporation de l'eau jusqu'à obtention d'une masse sèche totale stable (par exemple après 1h à 2h de séchage) rapportée sur la masse totale de la composition aqueuse, notamment à la pression atmosphérique.

Les méthodes qui peuvent être utilisées pour quantifier les cations et les anions d'une composition aqueuse (sodium, lithium, sulfates,...) peuvent être choisies parmi les méthodes suivantes : spectrométrie d'absorption moléculaire, méthode titrimétrique/ complexométrique, méthode électrochimique, spectrométrie atomique, électrophorèse capillaire, chromatographie ionique/détection conductimétrique, résonance magnétique nucléaire pour le ³¹ P, méthode enzymatique/détection UV, de préférence la chromatographie ionique.

La conductivité (psiemens/cm), ou conductivité électrolytique et le pH, sont de préférence mesurée à l'aide d'une sonde de mesure de la conductivité et du pH, par exemple de type pH / Conductivity: WTW3110.

Dans le présent texte, les concentrations massiques en sulfates de sodium ou en hydroxyde de lithium sont calculées en rapportant la masse sèche en sulfates de sodium ou en hydroxyde de lithium par rapport à la masse totale de la liqueur mère (I) ou (I') ou (II) ou (II') ou (III) ou (III') ou (IV) ou (IV') (en particulier dont l'eau de la liqueur), ou encore par rapport à la masse totale de la composition aqueuse diluée (C) ou (C') ou (D) ou (D') (en particulier dont l'eau de la composition aqueuse diluée), en particulier la concentration massique correspond au rapport de la masse en grammes de sulfates de sodium ou d'hydroxyde de lithium pour 100 g de la composition diluée incluant l'eau ou 100 g de la liqueur incluant l'eau.

On comprend dans le présent texte par « au moins en partie d'un produit donné (composition aqueuse, liqueur mère, sel,...) » que seulement une partie de ce produit ou essentiellement la totalité de ce produit est mis en oeuvre.

### Brève description des dessins

L'invention sera mieux comprise à la lecture de la description qui suit des différents modes de réalisation de l'invention donnés à titre d'exemples non limitatifs, en référence aux dessins annexés, sur lesquels :
[Fig. 1] La figure 1 représente schématiquement un premier exemple de procédé de préparation d'hydroxyde de lithium selon l'invention;
[Fig. 2] La figure 2 représente schématiquement un second exemple de procédé de préparation d'hydroxyde de lithium selon l'invention;
[Fig. 3] La figure 3 représente schématiquement un troisième exemple de procédé de préparation d'hydroxyde de lithium selon l'invention;
[Fig. 4] La figure 4 représente schématiquement un quatrième exemple de procédé de préparation d'hydroxyde de lithium selon l'invention;
[Fig. 5] La figure 5 représente schématiquement une cellule d'une étape d'électrodialyse à membranes bipolaires anionique (EDBP1) de l'étape a); et
[Fig. 6] La figure 6 représente schématiquement une cellule d'une étape d'électrodialyse à membranes bipolaires anionique/cationique (EDBP2) de l'étape j) ou j*'*);
[Fig. 7] La figure 7 représente l'évolution du pH en ordonnée d'une composition aqueuse (A) dans le second compartiment d'au moins une cellule de l'électrodialyseur (EDBP1) lors de l'étape d'électrodialyse a) (EDBP1) en fonction du temps en abscisse pour différentes concentrations en acide sulfurique dans le premier compartiment correspondant aux essais 1 à 3;
[Fig. 8] La figure 8 représente l'évolution de la conductivité en ordonnée de la composition aqueuse (A) dans le second compartiment d'au moins une cellule de l'électrodialyseur (EDBP1) lors de l'étape d'électrodialyse a) (EDBP1) en fonction du temps en abscisse pour différentes concentrations en acide sulfurique dans le premier compartiment correspondant aux essais 1 à 3;
[Fig. 9] La figure 9 représente l'évolution de la production de LiOH (indiquée en équivalent OH par litre de la composition aqueuse (A) en ordonnée) lors de l'étape d'électrodialyse a) (EDBP1) en fonction du temps en abscisse pour différentes concentrations en acide sulfurique dans le premier compartiment correspondant aux essais 2 et 3.
[Fig. 10] La figure 10 est un tableau reprenant les différentes concentrations initiales et finales en Li, Na, OH, SO₄ dans le second compartiment de l'EDBP1, la concentration initiale ou finale en acide sulfurique dans le premier compartiment de l'EDBP1, et les conditions de mise en oeuvre pour les essais 1 à 3 effectuée sur un electrodialyseur comprenant plusieurs cellules, telle que la cellule 200 représentée à la figure 5.

### Description des modes de réalisation à titre non limitatif

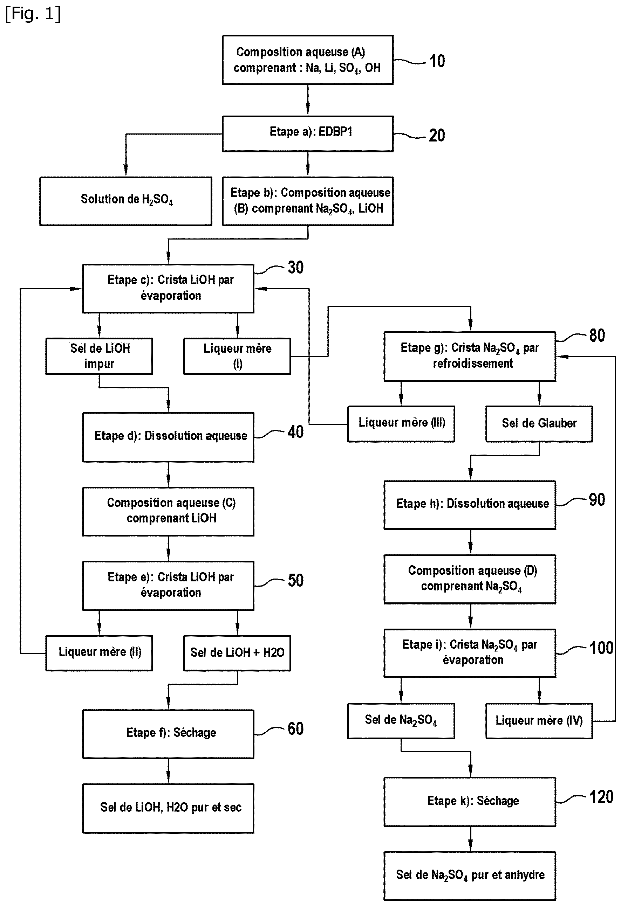

Le premier exemple de procédé de préparation d'hydroxyde de lithium représenté à la figure 1 comprend une première étape 10 de fourniture d'une composition aqueuse (A) comprenant du sulfate de sodium et du sulfate de lithium, en particulier ayant subi une étape préalable d'extraction des cations multivalents, notamment des ions magnésium et calcium. Dans cet exemple, l'extrait sec massique de la composition (A) est compris entre 8% et 16%, le rapport de la masse des ions sodium et lithium sur la masse totale en cations dans ladite composition (A), ou sur la masse sèche totale de la composition (A), est supérieure ou égale à 95%, le rapport de la masse en ions sulfates et hydroxyles sur la masse totale en anions dans ladite composition (A), ou sur la masse sèche totale de la composition (A),est supérieure ou égale à 95%. Le pH initial de la composition aqueuse (A) est de préférence compris entre 5 et 8. Le ratio massique sulfates de lithium / sulfates de sodium est de préférence supérieur à 1, dans cet exemple précis de l'ordre de 1,5.

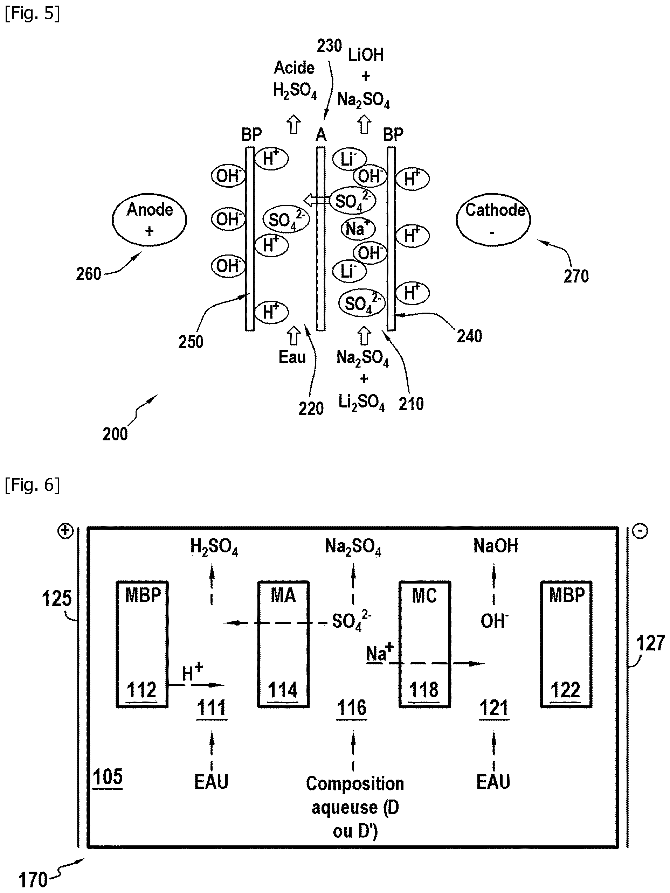

Cette composition aqueuse (A) subit une étape 20 d'électrodialyse à membranes bipolaires a) (EDBP1) au moyen d'un électrodialyseur comprenant au moins une cellule d'électrodialyse, telle que par exemple au moins la cellule 200 représentée de manière schématique à la figure 5.

### Fonctionnement de la cellule 200 représentée à la figure 5

Avantageusement, lors de l'étape a) 20, la composition aqueuse (A) est alimentée au second compartiment 210 de ladite au moins cellule 200. De l'eau déminéralisée, en particulier osmosée, est alimentée au premier compartiment 220 de ladite au moins une cellule 200. Le premier compartiment 220 est délimité entre une membrane anionique centrale 230 et une première membrane bipolaire 250. Le second compartiment 210 est délimité entre la membrane anionique centrale 230 et une seconde membrane bipolaire 240. Un empilement de plusieurs cellules, telle que la cellule 200, est disposé entre une anode 260 et une cathode 270. Avantageusement, la première membrane bipolaire 250 a une face cationique orientée vers la membrane anionique centrale 230 et une face anionique orientée vers l'anode 260. Avantageusement, la seconde membrane bipolaire 240 a une face cationique orientée vers la cathode 270, et une face anionique orientée vers la membrane anionique centrale 230.

Lorsqu'une tension est appliquée à ladite au moins une cellule 200, des ions hydroxyles OH⁻ et protons H⁺ sont produits au niveau des première et seconde membranes bipolaires 250 et 270 de sorte que le premier compartiment 220 est alimenté en protons (H⁺) et le second compartiment 210 est alimenté en ions hydroxyles (OH⁻). Les ions sulfates traversent la membrane anionique centrale 230, et migrent du second compartiment 210 vers le premier compartiment 220, diminuant ainsi la concentration en sulfates dans le second compartiment. La migration des ions sulfates vers le premier compartiment 220, combinée avec la production d'ions hydroxyles dans le second compartiment 210, permet de produire de l'hydroxyde de lithium dans le second compartiment 210 en mélange avec du sulfate de sodium. Le pH de la composition aqueuse (B) en sortie du second compartiment 210 est donc augmenté, en particulier supérieur ou égal à 8, plus particulièrement supérieur ou égal à 10. Le pH de l'eau en sortie du premier compartiment est quant à lui abaissé, en particulier inférieur ou égal à 2 ou 1 du fait de la formation d'acide sulfurique.

Le premier exemple de procédé comprend ensuite une première étape de cristallisation par évaporation c) 30 d'une partie de l'hydroxyde de lithium de la composition aqueuse (B) provenant du second compartiment 210 de la cellule 200. Lors de l'étape de cristallisation par évaporation c) 30, la composition aqueuse (B) est chauffée puis concentrée par évaporation, de préférence à une température allant de environ 30°C à environ 110°C, par exemple à une température d'environ 60°C, jusqu'à la formation d'hydroxyde de lithium solide (notamment impur) d'une part, et d'une liqueur mère I d'autre part. La liqueur mère I comprend de l'hydroxyde de lithium (dont la concentration massique est de préférence comprise entre 6% et 10%) et du sulfate de sodium (dont la concentration massique est de préférence comprise entre 10% et 16%). Les concentrations massiques sont calculées par rapport à la masse totale de la liqueur mère I.

Le sel solide de LiOH obtenu après l'étape de cristallisation par évaporation c) 30 est impur. Avantageusement, afin de le purifier, au moins une partie de ce sel de LiOH est dissous dans de l'eau déminéralisée dans une étape de dissolution aqueuse d) pour former une composition aqueuse (C) comprenant un sel de LiOH. En particulier, la quantité d'eau ajoutée est fonction du seuil de solubilité du LiOH, la quantité de LiOH doit en effet rester inférieure à son seuil de solubilité afin d'éviter une précipitation/agglomération du LiOH en solution. La composition aqueuse (C) comprend ainsi de préférence environ 6% en masse de LiOH à environ 35°C. Cette composition aqueuse (C) subit alors une seconde étape de cristallisation par évaporation e) 50, en particulier la composition aqueuse (C) est chauffée entre 30°C et 110°C, notamment à environ 60°C. Cette étape e) 50 permet la formation d'un sel de LiOH monohydraté solide, et d'une liqueur mère II comprenant de l'hydroxyde de lithium (dont la concentration massique est de préférence comprise entre 13% et 16%) et du sulfate de sodium (dont la concentration massique est de préférence inférieure à 2%). L'étape 50 peut être suivie d'une étape de séchage f) 60, par exemple à une température de chauffage de l'ordre de 50°C, jusqu'à la production d'un sel sec d'hydroxyde de lithium purifié et monohydraté (LiOH, H₂O).

La liqueur mère II issue de l'étape 50, étant peu chargée en sulfates et riche en LiOH, peut être recyclée en étant, alimentée à la première étape de cristallisation c) par évaporation 30, éventuellement en mélange avec au moins une partie de la composition aqueuse (B). La seconde étape de cristallisation par évaporation e) 50 permet d'obtenir, notamment après séchage f) 60, des cristaux de LiOH monohydraté de grande pureté, et par exemple adapté aux grades requis pour la fabrication de batteries.

La liqueur mère I provenant de la première cristallisation par évaporation c) 30 peut être avantageusement recyclée en faisant subir à au moins une partie de cette dernière une première cristallisation par refroidissement g) 80, en particulier en appliquant une température de refroidissement comprise entre -10°C et +15°C, en particulier de l'ordre de 0°C. En effet, la liqueur mère I en sortie de l'étape c) 60, ayant été chauffée, est à une température de l'ordre d'environ 60°C-70°C. On profite ainsi de cette énergie calorifique dans l'étape g) 80 pour produire une liqueur mère III comprenant de l'hydroxyde de lithium (dont la concentration massique est de préférence comprise entre 6% et 10%) et du sulfate de sodium (dont la concentration massique est de préférence comprise entre 10% et 16%) et cristalliser le sulfate de sodium. Cette liqueur mère III étant riche en hydroxyde de lithium peut être avantageusement recyclée lors de la première cristallisation par évaporation c) 30, éventuellement en étant mélangée, au moins en partie, avec la composition aqueuse B. L'étape g) 80 permet également de produire un sel de sulfate de sodium, en particulier un sel de Glauber (Na₂SO₄, 10H₂O). Au moins une partie du sel de Glauber obtenue à l'étape g) 80, est dissous dans de l'eau, notamment distillée, lors d'une étape de dissolution h) 90, de préférence à une concentration massique allant de 20% à 30%, par exemple de l'ordre de 27%-28% à 35°C. De préférence, la concentration massique en sulfate de sodium dans la composition aqueuse (D) produite est déterminée en sorte de rester en-dessous du seuil de solubilité de ce dernier. La composition aqueuse (D) comprenant le sel de Glauber dissous peut subir alors avantageusement une étape de cristallisation par évaporation i) 100 au-cours de laquelle la composition (D) est chauffée, en particulier à une température allant d'environ 50°C à environ 110°C, par exemple à environ 80°C. Cette étape i) 100 peut être suivie d'une étape de séchage k) 120, en particulier à une température de 80-90°C. Le sel obtenu est de préférence un sel anhydre de sulfate de sodium. Cette étape de cristallisation par évaporation i) 100 permet la formation d'une liqueur mère IV comprenant de l'hydroxyde de lithium (dont la concentration massique est de préférence inférieure ou égale à 2%) et du sulfate de sodium (dont la concentration massique est de préférence comprise entre 25% et 35%, par exemple de l'ordre de 30%). La liqueur mère IV peut être recyclée à l'étape de cristallisation par refroidissement g) 80, éventuellement en mélange avec la liqueur mère I.

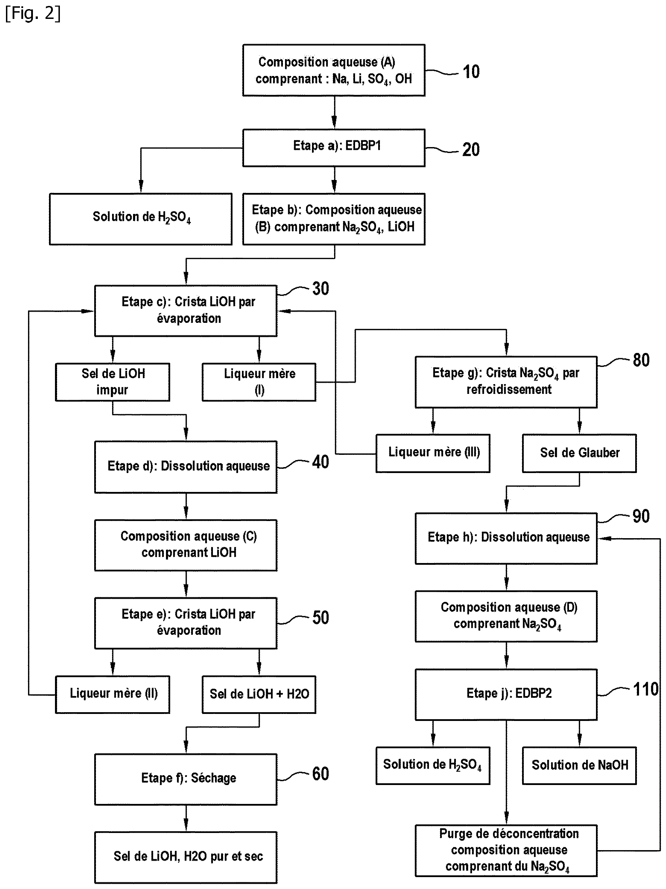

Le second exemple de procédé représenté à la figure 2 est similaire au premier exemple de procédé, et diffère de ce dernier dans les étapes appliquées à la composition aqueuse (D). Les étapes du premier exemple de procédé reprises dans le second exemple de procédé ont les mêmes références.

Dans le second exemple de procédé, la composition aqueuse (D) subit une étape d'électrodialyse (EDBP2) à membranes bipolaires j) 110 et non une étape de cristallisation i).

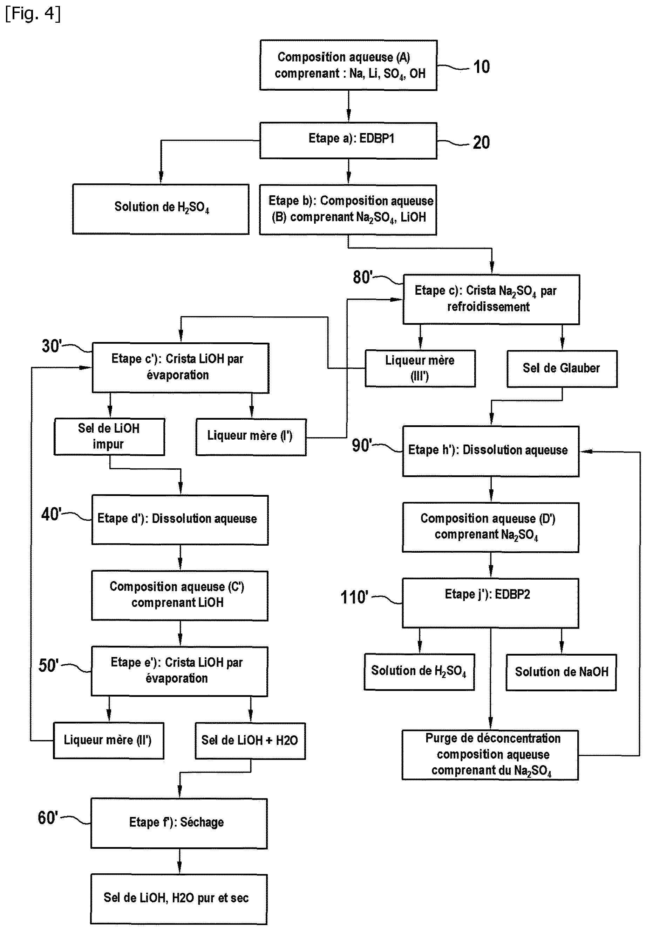

L'électrodialyseur à membranes bipolaires de l'étape j) 110 (ou de l'étape j') 110' s'agissant du quatrième exemple de procédé illustré à la figure 4 et décrit ci-dessous) comprend un empilement de cellules, telle que la cellule 170 représentée schématiquement à la figure 6.

### Fonctionnement de la cellule 170 représentée à la figure 6

En pratique, la composition (D) (ou D' s'agissant du quatrième exemple de procédé illustré à la figure 4 et décrit ci-dessous) est alimentée dans le compartiment central 116 de la cellule 170 et circule entre une membrane anionique (MA) 114 et une membrane cationique (MC) 118. De l'eau, en particulier distillée (ou de l'eau adoucie), est alimentée en parallèle dans un premier compartiment 111 de la cellule d'électrodialyse 170 et dans un troisième compartiment 121 de la cellule d'électrodialyse 170. L'eau circule dans le premier compartiment 111 entre une membrane bipolaire 112 et la membrane anionique 114. Dans le troisième compartiment 121, l'eau circule entre la membrane cationique 118 et la membrane bipolaire 122. La membrane bipolaire 112 comprend une face anionique orientée vers l'anode 125, et une face cationique orientée vers la membrane anionique 114. La membrane bipolaire 122 comprend une face anionique orientée vers la membrane cationique 118, et une face cationique orientée vers la cathode 127.

Grâce aux membranes bipolaires 112 et 122, des protons migrent dans le premier compartiment 111, et des ions hydroxyles migrent dans le troisième compartiment 121.

Avantageusement, les ions sulfates de la composition (D) (ou D' s'agissant du quatrième exemple de procédé) dans le second compartiment central 116 migrent à travers la membrane anionique 114 et s'accumulent dans le premier compartiment 111 pour produire de l'acide sulfurique.

Avantageusement, les ions sodium de la composition (D) (ou D' s'agissant du quatrième exemple de procédé) dans le second compartiment central 116 migrent à travers la membrane cationique 118, et s'accumulent dans le troisième compartiment 121 pour former de l'hydroxyde de soude.

La purge de déconcentration de l'électrodialyseur à l'étape j) 110 (ou à l'étape j') 110' s'agissant du quatrième exemple de procédé ci-dessous) comprenant un sel de sulfate de sodium peut être alimentée à l'étape h) (ou à l'étape h' s'agissant du quatrième exemple de procédé ci-dessous) pour être diluée et produire ainsi une composition aqueuse (D) (ou D' s'agissant du quatrième exemple de procédé). L'étape j) 110 (ou l'étape j') 110*'*) permet avantageusement la formation d'une base et d'un acide à partir du sel de sulfate de sodium recyclé dans le procédé de préparation d'hydroxyde de lithium. La base et l'acide formés peuvent être utilisés dans des procédés en amont du procédé de préparation d'hydroxyde de lithium dans des étapes d'extraction, de purification et de concentration pour la préparation d'une composition riche en lithium. L'acide sulfurique peut notamment être utilisé comme éluant appliqué à certains DLE (Direct Lithium Extraction).

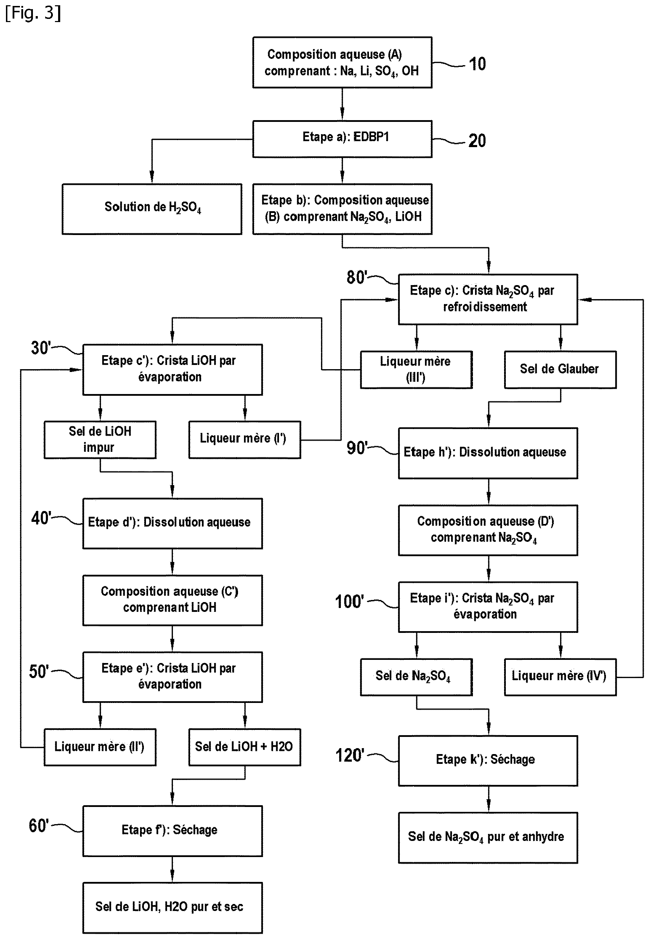

Le troisième exemple de procédé, représenté à la figure 3, comprend, de manière similaires aux premier et second exemples de procédés, une étape d'électrodialyse à membranes bipolaires a) 20 (EDBP1) au-cours de laquelle la composition aqueuse (A) est traitée pour produire une composition aqueuse (B) à l'étape b), en particulier telle que décrite ci-avant, plus particulièrement en référence au fonctionnement de la cellule 200 de la figure 5.

Le troisième exemple de procédé est de préférence mis en oeuvre lorsque la concentration massique en ions sodium est supérieure à la concentration massique en ions lithium de sorte qu'après l'étape b), on effectue une étape de cristallisation c) 80' par refroidissement du sel de sulfate de sodium afin de produire une liqueur mère III' dans laquelle la concentration massique en ions lithium est remontée et un sel de sulfate de sodium, notamment un sel de Glauber. De préférence, l'étape de cristallisation c) 80' par refroidissement est effectuée en appliquant une température de refroidissement comprise entre -10°C et +15°C.

La liqueur mère III' peut subir alors une étape de cristallisation par évaporation c*'*) 30' d'une partie de l'hydroxyde de lithium qu'elle comprend. Lors de l'étape de cristallisation par évaporation c*'*) 30', la liqueur mère III' est chauffée puis concentrée par évaporation, de préférence à une température allant de environ 30°C à environ 110°C, par exemple à une température d'environ 60°C, jusqu'à la formation d'hydroxyde de lithium solide (notamment impur) d'une part, et d'une liqueur mère I' d'autre part. La liqueur mère I' comprend de l'hydroxyde de lithium (dont la concentration massique est de préférence comprise entre 6% et 10%) et du sulfate de sodium (dont la concentration massique est de préférence comprise entre 10% et 16%). Les concentrations massiques sont calculées par rapport à la masse totale de la liqueur mère I'.

Le sel solide de LiOH obtenu après l'étape de cristallisation par évaporation c*'*) 30' est impur. Avantageusement, afin de le purifier, au moins une partie de ce sel de LiOH est dissous dans de l'eau déminéralisée dans une étape de dissolution aqueuse d*'*) pour former une composition aqueuse (C') comprenant un sel de LiOH. En particulier, la quantité d'eau ajoutée est fonction du seuil de solubilité du LiOH, la quantité de LiOH doit en effet rester inférieure à son seuil de solubilité afin d'éviter une précipitation/agglomération du LiOH en solution. La composition aqueuse (C*'*) comprend ainsi de préférence environ 6% en masse de LiOH à environ 35°C. Cette composition aqueuse (C') subit alors une seconde étape de cristallisation par évaporation e*'*) 50', en particulier la composition aqueuse (C*'*) est chauffée entre 30°C et 110°C, notamment à environ 60°C. Cette étape e*'*) 50' permet la formation d'un sel de LiOH monohydraté solide, et d'une liqueur mère II' comprenant de l'hydroxyde de lithium (dont la concentration massique est de préférence comprise entre 13% et 16%) et du sulfate de sodium (dont la concentration massique est de préférence inférieure à 2%). L'étape 50' peut être suivie d'une étape de séchage f*'*) 60', par exemple à une température de chauffage de l'ordre de 50°C, jusqu'à la production d'un sel sec d'hydroxyde de lithium purifié et monohydraté (LiOH, H₂O). La liqueur mère II' issue de l'étape e*'*) 50', étant peu chargée en sulfates et riche en LiOH, peut être recyclée en étant, alimentée à la première étape de cristallisation c*'*) par évaporation 30', éventuellement en mélange avec au moins une partie de la liqueur mère III'. La seconde étape de cristallisation par évaporation e*'*) 50' permet d'obtenir, notamment après séchage f*'*) 60', des cristaux de LiOH monohydraté de grande pureté, et par exemple adapté aux grades requis pour la fabrication de batteries.

La liqueur mère I' provenant de la première cristallisation par évaporation c*'*) 30' peut être avantageusement recyclée en étant alimentée, au moins en partie, à la première cristallisation par refroidissement c) 80'. En effet, la liqueur mère I' en sortie de l'étape c*'*) 30', ayant été chauffée, est à une température de l'ordre d'environ 60°C-70°C. On profite ainsi de cette énergie calorifique dans l'étape c) 80' pour produire une liqueur mère III' comprenant de l'hydroxyde de lithium (dont la concentration massique est de préférence comprise entre 6% et 10%) et du sulfate de sodium (dont la concentration massique est de préférence comprise entre 10% et 16%) et cristalliser le sulfate de sodium. Cette liqueur mère III' étant riche en hydroxyde de lithium peut être avantageusement recyclée lors de la première cristallisation par évaporation c*'*) 30', éventuellement en étant mélangée, au moins en partie, avec la liqueur mère II'. L'étape c) 80' permet également de produire un sel de sulfate de sodium, en particulier un sel de Glauber (Na₂SO₄, 10H₂O). Au moins une partie du sel de Glauber obtenue à l'étape c) 80', est dissous dans de l'eau, notamment distillée, lors d'une étape de dissolution h*'*) 90', de préférence à une concentration massique allant de 20% à 30%, par exemple de l'ordre de 27%-28% à 35°C. De préférence, la concentration massique en sulfate de sodium dans la composition aqueuse (D*'*) produite est déterminée en sorte de rester en-dessous du seuil de solubilité de ce dernier. La composition aqueuse (D') comprenant le sel de Glauber dissous peut subir alors avantageusement une étape de cristallisation par évaporation i*'*) 100 au-cours de laquelle la composition (D') est chauffée, en particulier à une température allant d'environ 50°C à environ 110°C, par exemple à environ 80°C. Cette étape i*'*) 100' peut être suivie d'une étape de séchage k*'*) 120', en particulier à une température de 80-90°C. Le sel obtenu est de préférence un sel anhydre de sulfate de sodium. Cette étape de cristallisation par évaporation i*'*) 100' permet la formation d'une liqueur mère IV' comprenant de l'hydroxyde de lithium (dont la concentration massique est de préférence inférieure ou égale à 2%) et du sulfate de sodium (dont la concentration massique est de préférence comprise entre 25% et 35%, par exemple de l'ordre de 30%). La liqueur mère IV' peut être recyclée à l'étape de cristallisation par refroidissement c) 80', éventuellement en mélange avec la liqueur mère I'.

En particulier, l'étape c*'*) 30' du troisième exemple de procédé correspond à l'étape c) 30 des premier et seconde exemples de procédés mais est appliquée à la liqueur mère (III') provenant de l'étape de cristallisation c) 80', et non directement à la composition aqueuse (B).

Le troisième exemple de procédé, tout comme le premier exemple de procédé, permet la fabrication d'un sel de sulfate de sodium anhydre et pur via une étape de cristallisation par évaporation i) 100 pour le premier exemple de procédé ou une étape de cristallisation par évaporation i*'*) 100' pour le troisième exemple de procédé. Le quatrième exemple de procédé représenté à la figure 4 est une variante du troisième exemple de procédé, et s'applique par exemple lorsque la concentration massique en ions sodium est supérieure à la concentration massique en ions lithium de sorte qu'après l'étape b), on effectue une étape de cristallisation c) 80', mais du sel de sulfate de sodium, et ce par refroidissement, afin de produire une liqueur mère III' dans laquelle la concentration massique en ions lithium est remontée et peut subir alors une étape de cristallisation par évaporation c*'*) 30'.

La quatrième exemple de procédé est similaire au troisième exemple de procédé à la différence que la composition aqueuse (D') subit une étape d'électrodialyse (EDBP2) à membranes bipolaires j*'*) 110' et non une étape de cristallisation i*'*).

Le quatrième exemple de procédé, tout comme le seconde exemple de procédé, permet de produire des solutions acide et basique via une étape d'électrodialyse à membranes bipolaires j) 110 pour le second exemple de procédé, et j*'*) 110' pour le quatrième exemple de procédé.

Les étapes d'électrodialyse à membranes bipolaires (EDBP1) et (EDBP2) dans les second et quatrième exemples de procédés représentés respectivement sur les figures 2 et 4 sont effectuées telles que décrites en référence au premier exemple de procédé représenté à la figure 1 pour l'EDBP1 et au second exemple de procédé représenté à la figure 2 pour l'EDBP2 à l'appui des figures 5 et 6. De manière similaire, l'étape d'électrodialyse à membranes bipolaires (EDBP1) du troisième exemple de procédé est effectuée telle que décrite en référence au premier exemple de procédé représenté à la figure 1 à l'appui de la figure 5.

Les concentrations massiques indiquées par rapport à une liqueur mère (I, II, III, et IV,I*'*,II*'*,III*'*,IV*'*) correspondent à la masse d'un composé donné par rapport à la masse totale de la liqueur mère (incluant donc l'eau).

### Description d'exemples de préparation d'une composition aqueuse (B)

Une composition aqueuse (A) comprenant une concentration massique d'un mélange de Li₂SO₄ et de Na₂SO₄ de 10% (mesurée par rapport à la masse totale de la composition aqueuse (A)), avec une proportion equi-massique entre Li et Na, a été traitée sur un électrodialyseur agencé pour réaliser l'étape a) (EDBP1) et comprenant environ 7 cellules similaires à la cellule 200 représentée à la figure 5 afin de convertir le sulfate de lithium en hydroxyde de lithium.

Les essais 1 à 3 ont été réalisés à une intensité de courant de 17 A (ampères) fixe et avec une tension libre. Les concentrations en acide étaient variables dans le premier compartiment, la concentration en H₂SO₄ dans le premier compartiment 220 maintenue constante à 2% pour l'essai 1, à 6% pour l'essai 2, et à 8% pour l'essai 3, par appoint d'eau continu. L'électrolyte H₂SO₄ est à 1N (soit 0,5 mol/L). Le pH initial de la composition (A) dans les 3 essais était variable entre 6 et 10 pour simuler la gamme de pH de différentes compositions (A).

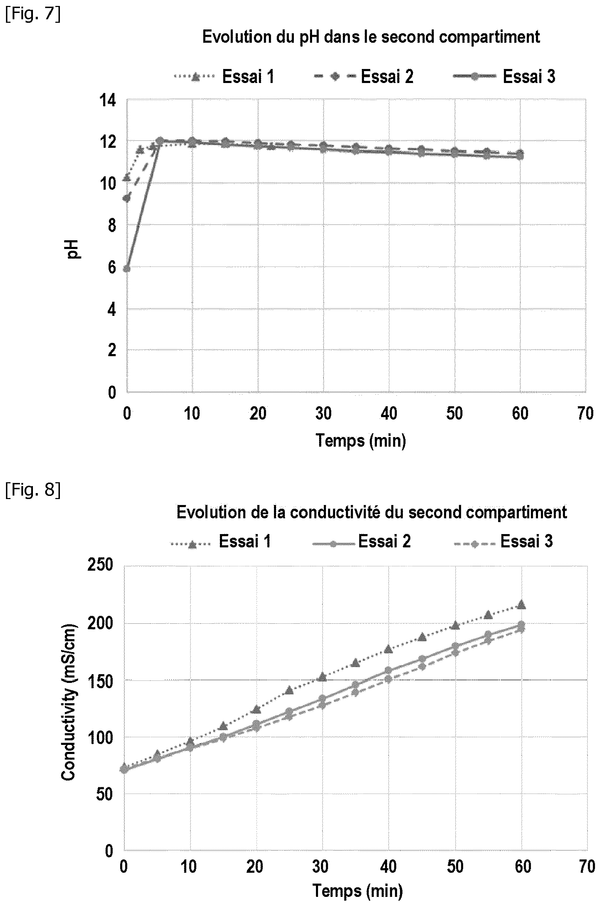

Sur la figure 7, on observe que quel que soit le pH de départ, au fur et à mesure de l'électrodialyse (EDBP1, étape a)), le pH augmente très rapidement dans le second compartiment 210 et se stabilise aux environ de 11.9.

Sur la figure 8, on observe que la conductivité augmente linéairement dans le second compartiment 210 pour chaque essai pour atteindre les 200 mS/cm. Les ions OH⁻ remplacent les ions sulfates pour former du LiOH plus conducteur que le Na₂SO₄

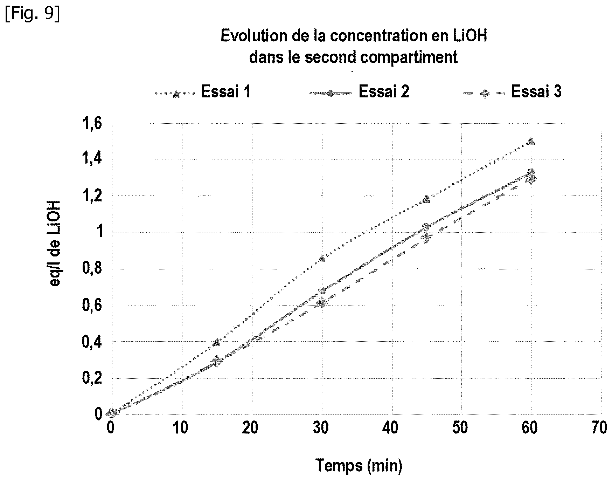

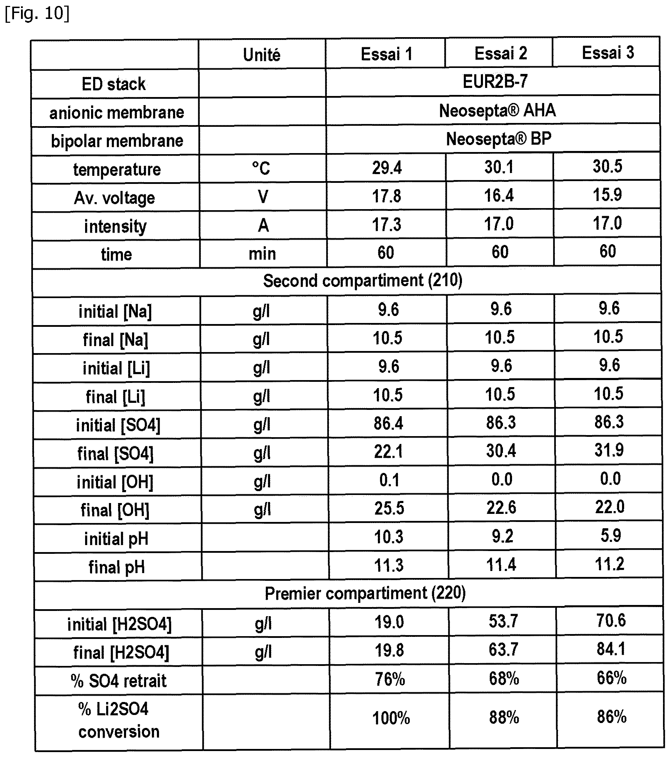

Sur la figure 9, on mesure la quantité de LiOH produit au cours du temps dans la composition B. On obtient une conversion du Li₂SO₄ en LiOH au terme de 60 min pour chaque essai : conversion de 100% pour l'essai 1, d'environ 88% au pour l'essai 2, et d'environ 86% pour l'essai 3. On démontre ainsi que le rendement de conversion est impacté par la concentration en acide sulfurique du compartiment 1. Le tableau de la figure 10 reprend les différentes concentrations initiales et finales en Li, Na, OH, SO₄²⁻ dans le second compartiment de l'EDBP1, la concentration initiale ou finale en acide sulfurique dans le premier compartiment de l'EDBP1, et les conditions de mise en oeuvre pour les essais 1 à 3.

Les essais 1 à 3 sont effectués dans cet exemple précis sur l'électrodialyseur pilote de la société Eurodia de type EUR2B-7.

Le procédé de préparation d'hydroxyde de lithium selon l'invention permet la conversion de Li₂SO₄ en LiOH de manière fiable et rapide, et de préparer avantageusement une composition B, comprenant en mélange du LiOH avec du Na₂SO₄, qui peut être traitée lors d'une étape de cristallisation :
- soit par évaporation pour la formation d'hydroxyde de lithium monohydraté de grande pureté, et de liqueurs mères qui peuvent être recyclées pour récupérer le lithium sous forme d'hydroxyde de lithium et récupérer le sulfate de sodium sous forme de sel de Glauber ou de sel anhydre,
- soit par refroidissement pour récupérer un sel de Glauber et produire une liqueur mère concentrée en lithium capable de suivre alors le chainage de cristallisation par évaporation.

Dans les exemples 1 à 3, le rapport massique Li/Na est supérieur à 1 (soit Li>Na) de sorte que la voie par évaporation serait privilégiée, de préférence correspondant au procédé illustré à la figure 1 ou 2.

Le procédé selon l'invention permet des économies d'énergie dans la production d'hydroxyde de lithium (par exemple en effectuant une évaporation par refroidissement sur une liqueur provenant d'une cristallisation par évaporation), de produire un sel d'hydroxyde de lithium de grande pureté, et ce en valorisant au maximum le lithium, et ce sans générer de sous-produits non valorisables, tel que cela est le cas dans l'état de la technique avec le carbonate de calcium. Dans le procédé selon l'invention, les sous-produits sont valorisables car ils peuvent être réutilisés : en acide, en base ou en sel à base de sulfate de sodium (notamment en sel de Glauber ou en sel de sulfate de sodium monohydraté).

## Revendications

1. Procédé de préparation d'hydroxyde de lithium **caractérisé en ce qu'**il comprend les étapes :
a) soumettre une composition aqueuse (A) comprenant du sulfate de lithium, et du sulfate de sodium à une électrodialyse à membranes bipolaires (EDBP1) pour convertir au moins une partie, ou sensiblement la totalité, du sulfate de lithium en hydroxyde de lithium, en particulier en conservant les sels de sulfate de sodium; ladite étape a) d'électrodialyse à membranes bipolaires (EDBP1) comprenant le traitement sur un électrodialyseur comprenant au moins une cellule d'électrodialyse (200), ladite cellule d'électrodialyse comprenant :
- un premier compartiment (220) dans lequel de l'eau est alimentée, entre une première membrane bipolaire (250) et une membrane anionique (230), notamment une membrane anionique centrale (230), et
- un deuxième compartiment (210) dans lequel ladite composition aqueuse (A) comprenant du sulfate de lithium et du sulfate de sodium est alimentée entre une membrane anionique (230), notamment ladite membrane anionique centrale (230), et une deuxième membrane bipolaire (240),
b) récupérer une composition aqueuse (B) comprenant de l'hydroxyde de lithium et du sulfate de sodium en sortie du deuxième compartiment (210) de ladite au moins une cellule d'électrodialyse (200),
c) soumettre au moins une partie de la composition aqueuse (B) comprenant de l'hydroxyde de lithium et du sulfate de sodium à une étape de cristallisation c) d'un sel (30,80'), notamment d'un sel d'hydroxyde de lithium (30) ou d'un sel de sulfate de sodium (80').

2. Procédé selon la revendication **1, caractérisé en ce que** l'étape de cristallisation c) d'un sel est une étape de cristallisation (30), notamment par évaporation, d'un sel d'hydroxyde de lithium pour l'obtention d'un sel d'hydroxyde de lithium d'une part et d'une liqueur mère (I) comprenant du sulfate de sodium et de l'hydroxyde de lithium d'autre part.

3. Procédé selon la revendication **1, caractérisé en ce que** l'étape de cristallisation c) d'un sel est une étape de cristallisation (80'), notamment par refroidissement, d'un sel de sulfate de sodium (Na₂SO₄) pour l'obtention d'un sel de Glaüber d'une part et d'une liqueur mère (III') comprenant de l'hydroxyde de lithium et du sulfate de sodium d'autre part.

4. Procédé selon la revendication **2, caractérisé en ce que** ledit procédé comprend une étape de dissolution d) (40) d'au moins une partie du sel d'hydroxyde de lithium obtenu à l'étape c) pour la formation d'une composition aqueuse (C) comprenant ledit sel d'hydroxyde de lithium dissous, et **en ce qu'**il comprend une étape de cristallisation e) (50), notamment par évaporation, d'au moins une partie de la composition aqueuse (C) pour l'obtention de cristaux d'hydroxyde de lithium, et éventuellement d'une liqueur mère (II), en particulier lesdits cristaux d'hydroxyde de lithium subissent une étape de séchage f) (60), plus particulièrement pour l'obtention de cristaux d'hydroxyde de lithium monohydraté.

5. Procédé selon l'une ou l'autre des revendications **2 et 4, caractérisé en ce qu'**il comprend une étape de cristallisation g) (80), notamment par refroidissement, d'au moins une partie de la liqueur mère (I) obtenue à l'étape de cristallisation c) (30), pour l'obtention d'un sel de Glaüber et d'une liqueur mère (III) comprenant du sulfate de sodium et de l'hydroxyde de lithium.

6. Procédé selon la revendication **3 ou 5, caractérisé en ce que** ledit procédé comprend :
- une étape de dissolution h) (90) ou h*'*) (90') de tout ou partie du sel de Glaüber en sorte de former une composition aqueuse (D) ou (D') comprenant du sulfate de sodium, et
- le traitement j) (110) ou j*'*) (110') d'au moins une partie de ladite composition aqueuse (D) ou (D') comprenant du sulfate de sodium par une électrodialyse à membranes bipolaires (EDBP2) pour l'extraction des ions sulfates d'une part et la formation d'acide sulfurique, et l'extraction des ions sodium d'autre part et la formation d'hydroxyde de sodium.

7. Procédé selon la revendication **3 ou 5, caractérisé en ce que** ledit procédé comprend :
- une étape de préparation d'une composition aqueuse (D) (90) ou (D') (90') à partir de tout ou partie du sel de Glaüber, et
- une étape de cristallisation i) (100) ou i*'*) (100'), notamment par évaporation, d'au moins une partie de ladite composition aqueuse (D) ou (D*'*) comprenant du sulfate de sodium, pour obtenir un sel de sulfate de sodium anhydre et une liqueur mère IV) ou IV*'*) comprenant du sulfate de sodium, et ladite étape de cristallisation i) ou i*'*) est éventuellement suivie d'une étape de séchage k) (120) ou k*'*) (120') du sel de sulfate de sodium obtenu à l'étape de cristallisation i) ou i*'*).

8. Procédé selon la revendication **3 ou 5, caractérisé en ce qu'**au moins une partie de la liqueur mère (III) ou (III') obtenue à l'étape de cristallisation g) (80) ou c) (80'), notamment par refroidissement, du sulfate de sodium (Na₂SO₄), subit une étape de cristallisation, notamment par évaporation, de l'hydroxyde de lithium (LiOH), en particulier il s'agit de l'étape de cristallisation c) (30) ou d'une étape de cristallisation c') (30').

9. Procédé selon les revendications **8 et 3, caractérisé en ce qu'**il comprend une étape de dissolution d*'*) (40') d'au moins une partie du sel d'hydroxyde de lithium obtenu à l'étape c*'*) pour la formation d'une composition aqueuse (C') comprenant ledit sel d'hydroxyde de lithium dissous, et ledit procédé comprend une étape de cristallisation e*'*) (50'), notamment par évaporation, d'au moins une partie de la composition aqueuse (C') pour l'obtention de cristaux d'hydroxyde de lithium, et éventuellement d'une liqueur mère (II'), en particulier lesdits cristaux d'hydroxyde de lithium subissent une étape de séchage f*'*) (60*'*).

10. Procédé selon la revendication **7, caractérisé en ce qu'**au moins une partie de la liqueur mère (IV) ou (IV') obtenue à l'étape de cristallisation i) (100) ou i*'*) (100'), notamment par évaporation, d'au moins une partie de la composition aqueuse (D) ou (D'), subit une étape de cristallisation g) ou c), notamment par refroidissement.

11. Procédé selon l'une quelconque des revendications **1 à 10, caractérisé en ce que** le rapport de la masse des ions lithium et des ions sodium sur la masse totale des cations dans la composition aqueuse (A), comprenant du sulfate de lithium et du sulfate de sodium et alimentée en entrée du second compartiment de ladite au moins une cellule d'électrodialyse de l'électrodialyseur à membranes bipolaires (EDBP1) à l'étape a), est supérieur ou égal à 95%, et **en ce que** le ratio massique entre les ions lithium et les ions sodium (Li/Na) dans ladite composition (A) est supérieur ou égal à 0,1 et inférieur ou égal à 9, de préférence supérieur ou égal à 0,4 et inférieur ou égal à 2,3.

12. Procédé selon l'une quelconque des revendications **1 à 11, caractérisé en ce que** la composition aqueuse (A), comprenant le sulfate de lithium et le sulfate de sodium alimentée en entrée du second compartiment de ladite au moins une cellule d'électrodialyse de l'électrodialyseur à membranes bipolaires (EDBP1) à l'étape a), a un pH supérieur ou égal à 4 et inférieur ou égal à 10,de préférence supérieur ou égal 5 et inférieur ou égal à 8.

13. Procédé selon l'une quelconque des revendications **1 à 12, caractérisé en ce que** la composition aqueuse (B), comprenant de l'hydroxyde de lithium et du sulfate de sodium en sortie du second compartiment de ladite au moins une cellule d'électrodialyse de l'électrodialyseur à membranes bipolaires (EDBP1) à l'étape a), a un pH supérieur ou égal à 9.

14. Procédé selon l'une quelconque des revendications **1 à 13, caractérisé en ce que** la composition aqueuse en sortie du premier compartiment de ladite au moins une cellule d'électrodialyse de l'électrodialyseur à membranes bipolaires (EDBP1) à l'étape a) comprend de l'acide sulfurique, de préférence a un pH inférieur ou égal à 2, encore de préférence inférieur ou égal à 1.

15. Procédé de fabrication selon l'une quelconque des revendications **1 à 14, caractérisé en ce que** la composition aqueuse (A) comprenant le sulfate de lithium et le sulfate de sodium alimentée en entrée du second compartiment de ladite au moins une cellule d'électrodialyse de l'électrodialyseur à membranes bipolaires (EDBP1) lors de l'étape (a) a subi un traitement préalable d'extraction des cations divalents, en particulier des ions calcium et des ions magnésium.

16. Installation, en particulier pour la mise en oeuvre du procédé de préparation d'hydroxyde de lithium selon l'une quelconque des revendications 1 à 15, **caractérisée en ce qu'**elle comprend:
a) un électrodialyseur (EDBP1) comprenant:
- au moins une cellule comprenant:
une première membrane bipolaire et une membrane anionique, en particulier une membrane anionique centrale, délimitant entre-elles un premier compartiment ayant une entrée pour l'admission d'eau et une sortie pour la sortie d'une composition aqueuse comprenant de l'acide sulfurique, et
- une seconde membrane bipolaire délimitant avec une membrane anionique, notamment ladite membrane anionique centrale, un deuxième compartiment ayant une entrée pour l'admission d'une composition aqueuse (A) comprenant du sulfate de lithium et du sulfate de sodium et une sortie pour la sortie d'une composition aqueuse (B) comprenant du sulfate de sodium et de l'hydroxyde de lithium,
b) une unité de cristallisation d'un sel, notamment d'un sel d'hydroxyde de lithium ou d'un sel de sulfate de sodium, ladite unité de cristallisation d'un sel comprenant une entrée pour l'admission d'au moins une partie de la composition aqueuse (B) comprenant du sulfate de sodium et de l'hydroxyde de lithium, ladite au moins une partie de la composition (B) provenant du second compartiment de ladite au moins une cellule de l'électrodialyseur (EDBP1).

17. Installation selon la revendication **16, caractérisée en ce que**:
- l'unité de cristallisation d'un sel c) est une unité de cristallisation, notamment par évaporation, d'hydroxyde de lithium, comprenant une entrée pour l'admission d'au moins une partie de la composition aqueuse (B) comprenant du sulfate de sodium et de l'hydroxyde de lithium provenant du second compartiment de ladite au moins une cellule de l'éléctrodialyseur (EDBP1), et une première sortie pour la sortie d'hydroxyde de lithium solide et une seconde sortie pour la sortie d'une liqueur mère (I) comprenant du sulfate de sodium et de l'hydroxyde de lithium .

18. Installation selon la revendication **16, caractérisé en ce que** :
- l'unité de cristallisation d'un sel c) est une unité de cristallisation, notamment par refroidissement, de sulfate de sodium, comprenant une entrée pour l'admission d'au moins une partie de la composition aqueuse (B) comprenant du sulfate de sodium et de l'hydroxyde de lithium provenant du second compartiment de ladite au moins une cellule de l'éléctrodialyseur (EDBP1), et une première sortie pour la sortie de sulfate de sodium solide, en particulier d'un sel de Glauber, et une seconde sortie pour la sortie d'une liqueur mère (III') comprenant du sulfate de sodium et de l'hydroxyde de lithium.

19. Installation selon la revendication **17, caractérisé en ce que** ladite installation comprend:
- une unité de dissolution d), d'au moins une partie du sel d'hydroxyde de lithium provenant de l'unité de cristallisation c) pour la formation d'une composition aqueuse (C) comprenant ledit sel d'hydroxyde de lithium dissous, et
- une unité de cristallisation e), notamment par évaporation, comprenant une entrée pour l'admission d'au moins une partie de la composition aqueuse (C), et une première sortie pour la sortie de cristaux d'hydroxyde de lithium, et une seconde sortie pour la sortie d'une liqueur mère (II), en particulier ladite installation comprend en outre une unité de séchage f) desdits cristaux d'hydroxyde de lithium.

20. Installation selon l'une ou l'autre des revendications **17 et 19, caractérisé en ce que** ladite installation comprend :
- une unité de cristallisation g), notamment par refroidissement, comprenant une entrée pour l'admission d'au moins une partie de la liqueur mère (I) provenant de l'unité de cristallisation c), et une première sortie pour la sortie d'un sel de sulfate de sodium, notamment d'un sel de Glaüber, ainsi qu'une seconde sortie pour la sortie d'une liqueur mère (III) comprenant du sulfate de sodium et de l'hydroxyde de lithium.

21. Installation selon la revendication **18 ou 20, caractérisé en ce que** ladite installation comprend :
- une unité de dissolution h) ou h*'*) d'au moins une partie du sel de sulfate de sodium, notamment du sel de Glaüber, pour la formation d'une composition aqueuse (D) ou (D') comprenant du sulfate de sodium,
- un électrodialyseur à membranes bipolaires (EDBP2) pour le traitement j) ou j*'*) comprenant une entrée pour l'admission d'au moins une partie de ladite composition aqueuse (D) ou (D') comprenant du sulfate de sodium, et une première sortie pour la sortie d'acide sulfurique, et une seconde sortie pour la sortie d'hydroxyde de sodium.

22. Installation selon la revendication **18 ou 20, caractérisé en ce que** ladite installation comprend :
- une unité de préparation h) ou h*'*) d'une composition aqueuse (D) ou (D') à partir d'au moins une partie du sel de sulfate de sodium, notamment du sel de Glaüber, et
- une unité de cristallisation i) ou i*'*), notamment par évaporation, comprenant une entrée pour l'admission d'au moins une partie de ladite composition aqueuse (D) ou (D') comprenant du sulfate de sodium, et une première sortie pour la sortie d'un sel de sulfate de sodium et une seconde sortie pour la sortie d'une liqueur mère (IV) ou (IV') comprenant du sulfate de sodium, ladite installation comprend éventuellement une unité de séchage k) ou k*'*) du sel de sulfate de sodium provenant de l'unité de cristallisation i) ou i*'*) pour l'obtention d'un sel de sulfate de sodium anhydre.

23. Installation selon la revendication **18 ou 20, caractérisé en ce que** ladite installation comprend :
une unité d'acheminement d'au moins une partie de la liqueur mère (III) ou (III*'*) provenant de l'unité de cristallisation g) ou c) par refroidissement, à l'unité de cristallisation c) ou une unité de cristallisation c*'*), ladite unité de cristallisation c) ou c') comprend une première sortie pour la sortie d'hydroxyde de lithium, et une seconde sortie pour la sortie de la liqueur mère (I) ou d'une liqueur mère (I*'*).

24. Installation selon les revendications **23 et 18, caractérisé en ce que** ladite installation comprend :
- une unité de dissolution d*'*), d'au moins une partie du sel d'hydroxyde de lithium provenant de l'unité de cristallisation c*'*) pour la formation d'une composition aqueuse (C') comprenant ledit sel d'hydroxyde de lithium dissous, et
- une unité de cristallisation e*'*), notamment par évaporation, comprenant une entrée pour l'admission d'au moins une partie de la composition aqueuse (C'), et une première sortie pour la sortie de cristaux d'hydroxyde de lithium, et une seconde sortie pour la sortie d'une liqueur mère (II'), en particulier ladite installation comprend en outre une unité de séchage f*'*) desdits cristaux d'hydroxyde de lithium.

25. Installation selon la revendication **22, caractérisé en ce que** ladite installation comprend une unité d'acheminement d'au moins une partie de la liqueur mère (IV) ou (IV') provenant de l'unité de cristallisation i) ou i*'*) à l'unité de cristallisation c) ou g), notamment par refroidissement.
